(19) Europäisches Patentamt
European Patent Office
Office européen des brevets

(11) EP 2 153 972 A2

(12) # EUROPEAN PATENT APPLICATION

(43) Date of publication:
**17.02.2010 Bulletin 2010/07**

(51) Int Cl.:
***B29C 55/00*** *(2006.01)* ***G02B 5/30*** *(2006.01)*

(21) Application number: **09167153.7**

(22) Date of filing: **04.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **04.08.2008 JP 2008201288**
**12.05.2009 JP 2009115420**

(71) Applicant: **Fujifilm Corporation**
**Minato-ku**
**Tokyo 106-0031 (JP)**

(72) Inventors:
- **Takegami, Ryuta**
  **Kanagawa 250-0193 (JP)**
- **Noritsune, Masahiko**
  **Kanagawa 250-0193 (JP)**
- **Hayashi, Naoki**
  **Kanagawa 250-0193 (JP)**

(74) Representative: **HOFFMANN EITLE**
**Patent- und Rechtsanwälte**
**Arabellastrasse 4**
**81925 München (DE)**

(54) **Method for producing optical film, optical film, polarizer, optical compensatory film, antireflection film and liquid crystal display device**

(57) A method for producing an optical film comprising leading a melt (14) of a composition containing a thermoplastic resin to pass between a first nip-pressing surface (11) and a second nip-pressing surface (12) of a nip-pressing unit whereby the melt is continuously nip-pressed therebetween to form a film, wherein the nip-pressing unit applies a pressure of from 20 to 500 MPa to the melt, and the first nip-pressing surface moves at a higher speed than the second nip-pressing surface.

Fig.7

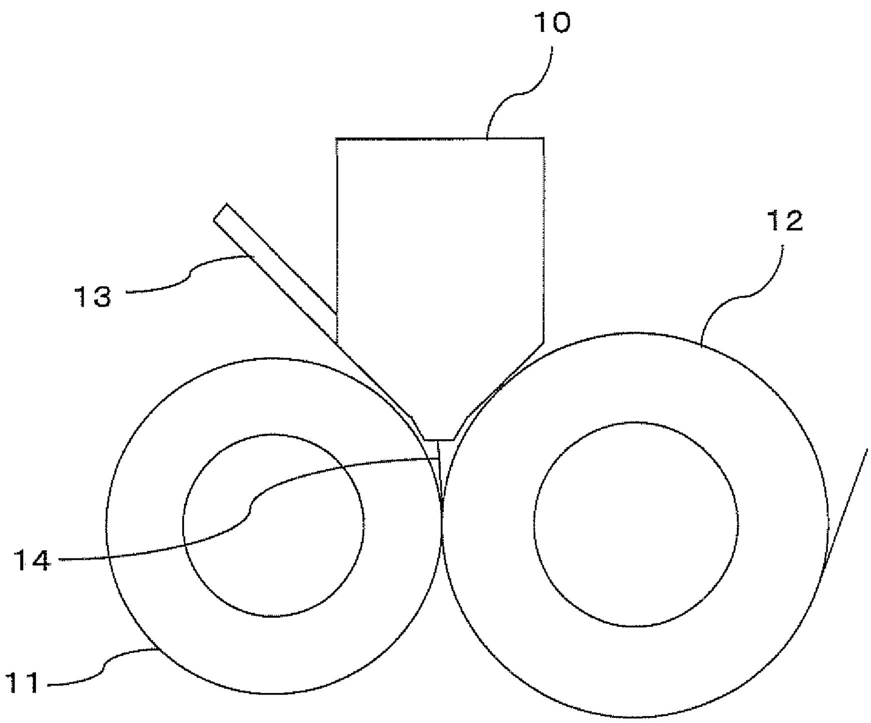


EP 2 153 972 A2

## Description

BACKGROUND OF THE INVENTION

Technical Field

The present invention relates to a method for producing an optical film. The invention also relates to an optical film produced according to the production method, an optical film having a special internal structure, and to a polarizer and a liquid crystal display device comprising the film.

Background Art

With the recent prosperity of the liquid crystal display market, various films have been developed. For example, JP-A 6-222213, JP-A 2003-25414 and JP-A 2007-38646 disclose tilted retardation films.
For example, JP-A 6-222213 describes a method of leading a film to pass through two rolls running at a different peripheral speed whereby a shearing stress is applied to the film to produce a film having a tilted optical axis, indicating the application of the film to TN-mode liquid crystal displays. However, the method described in Patent Reference 1 has some problems in that the optical properties of the films produced greatly fluctuate and that the surfaces of the films are readily scratched. JP-A 6-222213 does not suggest the applicability of the method to melts. As opposed to this, JP-A 2003-25414 and JP-A 2007-38646 describe a technique of producing an optical film having a thickness of from 100 to 150 μm, wherein two rolls of a rubber roll and a metal roll running at a different peripheral speed are used, a melt is sandwiched between these rolls and a shearing stress is given thereto, to thereby solve the above-mentioned problems.
However, JP-A 2003-25414 and JP-A 2007-38646 do not describe an optical film of which the properties are satisfactory for optical compensation actually in transmission-type TN or ECB-mode liquid crystal displays and in semitransmission-type TN- or ECB-mode liquid crystal displays.
On the other hand, heretofore, it is known that, when a roll pressure is increased in film formation, then a large compression force is given to the thickness direction of the film being formed and, in the film formed, the molecular chains are oriented selectively in the thickness direction of the film. However, Japanese Patent No. 3194904 says that the film produced under an increased roll pressure to have a great residual strain remaining therein causes a trouble of diffused reflection of light and birefringence occurring therein, and therefore the film could not be applied to optical use and liquid crystal display devices, further saying that the film thickness is limited to at most about 300 μm. Accordingly, this says that in optical use, the roll pressure in forming the films is preferably reduced to thereby reduce the retardation of the formed films. In fact, it is known that the orientation in the thickness direction of the films produced according to a melt touch roll method is greater than that of the films produced according to a melt casting method.
However, heretofore there is not known a method for producing an optical film satisfactory for optical compensation in transmission-type TN or ECB-mode liquid crystal displays or in semitransmission-type TN or ECB liquid crystal displays. No one has heretofore made detailed investigations about the relationship between the optical properties of such an optical film and the characteristics of the internal structure of the film.
Heretofore, in the field of optical films, it is anticipated that, when the pressure between the rolls in film production increased, then the compression force is thereby increased and the molecular chains may be selectively aligned in the direction of the thickness of the film being produced (plane alignment) whereby the tilt structure of the film may be relatively lowered, as in Comparative Example 1 of JP-A 6-222213 and in Polymer Aligning, Polymer Processing One Point <4>, Chap. 3, p. 37. The tilt structure as referred to herein means |Re[+40°] - Re[-40°]| to be described hereinunder.
According to the conventional technique described in JP-A 2003-25414 and others, in case where a metal roll and an elastic roll having a low hardness (for example, a rubber roll coated with a metal on its surface, as described in that JP-A 2003-25414) are used and when a force corresponding to a large pressure of at least 20 MPa is given to the rolls, then the rubber roll is deformed. Accordingly, the contact area with the melt increases, and as a result, a high pressure could not be given to the nip-pressing unit. Therefore, at present, no one has made detailed investigations relating to a method for producing a film having an increased tilt structure by increasing the pressure to be given to the nip-pressing unit. Further more, Japanese Patent No. 3194904 says, in the "background art" section thereof, that, when the roll nip-pressing pressure is increased, then the strain formed in the film increases in proportion thereto, and the sheet having such a residual strain causes a trouble of diffused reflection of light and birefringence occurring therein, and therefore the sheet could not be applied to optical use, for example, for liquid crystal display devices, etc. Specifically, in the art, the technique of increasing the pressure to be given between nip-pressing units tends to be evaded, and in particular, the tendency is remarkable in the field of optical films.

SUMMARY OF THE INVENTION

The present invention has been made in consideration of the above-mentioned problems, and a first object of the invention is to provide an optical film having a special internal structure and capable of realizing sufficient optical compensation when used in liquid crystal displays, and to provide a method for producing the film. A second object of the invention is to provide a polarizer, an optical compensatory film, an antireflection film and a liquid crystal display device comprising the film.

Taking the above-mentioned problems into consideration, the present inventors have further investigated the internal structure of an optical film produced according to a conventional method, and as a result, have found that the tilt structure of the film is insufficient and additionally that the orientation structure of the thermoplastic molecules in the film thickness direction differs from the desired structure of the film.

With that, the inventors have tried increasing the pressure between the nip-pressing units in a process of producing a film having a tilt structure by continuously nip-pressing the film being produced between the first nip-pressing surface and the second nip-pressing surface constituting the nip-pressing unit, and surprisingly as a result, the inventors have found that a film having an increased tilt structure and therefore having a special internal structure different from the internal structure of known films can be produced. Further, the inventors have found that, as compared with a conventional, liquid crystal coated, viewing angle compensation film, the film of the invention has another advantage in that, when used in liquid crystal displays, it can increase the front contrast (hereinafter this may be referred to as "front CR") and is a novel film heretofore unknown in the art.

Specifically, the inventors have assiduously studied for the purpose of solving the above-mentioned problems and, as a result, have found that the production method mentioned below and the film produced according to the method can solve the above-mentioned problems, and have completed the invention described hereinunder.

[1] A method for producing an optical film comprising leading a melt of a composition containing a thermoplastic resin to pass between a first nip-pressing surface and a second nip-pressing surface of a nip-pressing unit whereby the melt is continuously nip-pressed therebetween to form a film, wherein the nip-pressing unit applies a pressure of from 20 to 500 MPa to the melt, and the first nip-pressing surface moves at a higher speed than the second nip-pressing surface.

[2] The method for producing an optical film of [1], further comprising melt-extruding the composition containing a thermoplastic resin through a die, wherein the melt-extruded melt is led to pass between the first nip-pressing surface and the second nip-pressing surface.

[3] The method for producing an optical film of [1] or [2], wherein the ratio of the moving speed of the second nip-pressing surface to that of the first nip-pressing surface in the nip-pressing unit, as defined according to the following formula (I), is from 0.60 to 0.99:

$$\text{Moving speed ratio} = R_{2nd} / R_{1st} \qquad \text{(I)}$$

wherein $R_{2nd}$ is the moving speed of the second nip-pressing surface and $R_{1st}$ is the moving speed of the first nip-pressing surface.

[4] The method for producing an optical film of any one of [1] to [3], wherein the temperature of the first nip-pressing surface and the second nip-pressing surface are controlled to be from (Tg-70°C) to (Tg+10°C) in which Tg means the glass transition temperature of the thermoplastic resin.

[5] The method for producing an optical film of any one of [1] to [4], wherein the nip-pressing unit contains two rolls running at a different peripheral speed, and the surface of the roll running at a higher peripheral speed is the first nip-pressing surface and the surface of the roll running at a lower peripheral speed is the second nip-pressing surface.

[6] The method for producing an optical film of [5], wherein the two rolls both have a Shore hardness of at least 45 HS.

[7] The method for producing an optical film of [5] or [6], wherein the two rolls are both metal rolls.

[8] The method for producing an optical film of any one of [1] to [7], wherein the thermoplastic resin is at least one selected from the group consisting of cyclic olefin resins, cellulose acylate resins, polycarbonate resins, styrene resins and acrylic resins.

[9] An optical film produced by the method for producing an optical film of any one of [1] to [8] and having a thickness of at most 200 μm.

[10] An optical film comprising a thermoplastic resin and having a tilt direction, which is such that, when a sliced section of the film having both a tilt direction and a thickness direction in the sliced plane thereof is placed between two polarizers set in the crossed Nicols configuration, and the two crossed Nicols polarizers are rotated within a range of from 0° to 90° while irradiated with light in the direction perpendicular to the polarizer plane, and when the

sliced section of the film is analyzed sequentially from one end to the other end in the thickness direction thereof, then a first detected extinction angle differs from a last detected extinction angle by over 3°.

[11] The optical film of [10], wherein the extinction angle changes in a part of the sliced section of which the birefringence is not substantially 0.

[12] The optical film of [10] of [11], which has a part having a maximum birefringence inside the film when the sliced section of the film is analyzed sequentially from one end to the other end in the thickness direction thereof.

[13] The optical film of any one of [10] to [12], satisfying the following formulae (II) and (III):

$$20\ \text{nm} \leq \text{Re}[0°] \leq 300\ \text{nm} \qquad \text{(II)},$$

$$5\ \text{nm} \leq |\text{Re}[+40°] - \text{Re}[-40°]| \leq 300\ \text{nm} \qquad \text{(III)},$$

wherein Re[0°] means a retardation measured in the normal direction of the film plane at a wavelength of 550 nm, Re[+40°] means a retardation measured in the direction tilted by 40° from the normal line of the film plane to the tilt direction, and Re[-40°] means and the retardation measured in the direction tilted by -40° from the normal line of the film plane to the tilt direction.

[14] The optical film of any one of [10] to [13], satisfying the following formula (IV):

$$40\ \text{nm} \leq \text{Rth} \leq 500\ \text{nm} \qquad \text{(IV)},$$

wherein Rth means a retardation in the thickness direction of the film and is expressed by the following formula:

$$\text{Rth} = \{(nx + ny)/2 - nz)\} \times d$$

wherein nx, ny and nz each mean the refractive index in each main axial direction of an index ellipsoid; and d means the film thickness.

[15] The optical film of [13] or [14], satisfying the following formulae (V), (VI) and (VII):

$$60\ \text{nm} \leq \text{Re}[0°] \leq 200\ \text{nm} \qquad \text{(V)},$$

$$60\ \text{nm} \leq |\text{Re}[+40°] - \text{Re}[-40°]| \leq 250\ \text{nm} \qquad \text{(VI)},$$

$$40\ \text{nm} \leq \text{Rth} \leq 350\ \text{nm} \qquad \text{(VII)}.$$

[16] An optical film comprising a thermoplastic resin and having a tilt direction, which satisfies the following formulae (VIII) and (IX):

$$60\ \text{nm} \leq \text{Re}[0°] \leq 300\ \text{nm} \qquad \text{(VIII)},$$

$$40\ \text{nm} \leq |\text{Re}[+40°] - \text{Re}[-40°]| \leq 300\ \text{nm} \qquad \text{(IX)}.$$

[17] The optical film of [16], satisfying the following formula (X):

$$40\ nm \leq Rth \leq 500\ nm \qquad (X),$$

$$Rth = \{(nx + ny)/2 - nz)\} \times d,$$

wherein nx, ny and nz each mean the refractive index in each main axial direction of an index ellipsoid; and d means the film thickness.

[18] The optical film of [16] or [17], satisfying all the following formulae (IX) to (XIII):

$$60\ nm \leq Re[0°] \leq 200\ nm \qquad (XI),$$

$$60\ nm \leq |Re[+40°] - Re[-40°]| \leq 250\ nm \qquad (XII),$$

$$40\ nm \leq Rth \leq 350\ nm \qquad (XIII).$$

[19] The optical film of any one of [9] to [18], which does not substantially contain a residual solvent.
[20] The optical film of any one of [9] to [19], which has a thickness of at most 100 μm.
[21] A polarizer comprising a polarizing element and an optical film of any one of [9] to [20].
[22] An optical compensatory film comprising an optical film of any one of [9] to [20].
[23] An antireflection film comprising an optical film of any one of [9] to [20].
[24] A liquid crystal display device comprising an optical film of any one of [9] to [20].

According to the invention, there are provided a film capable of realizing good optical compensation when used in liquid crystal displays, and a method for producing it. Precisely, according to the invention, there are provided a film capable of realizing good optical compensation when used in ECB-mode, OCB-mode or TN-mode liquid crystal displays, and a method for producing it. Heretofore, an optical compensatory film having an optical compensatory layer of a liquid crystal composition is laminate on a polarizing element and used in ECB-mode or TN-mode liquid crystal display devices. For example, known are an NH film (by Nippon Oil Corporation) and a WV film (by FUJIFILM Corporation) . According to the invention, there are provided a film having a simpler structure and its production method, not requiring an optical compensatory film of a liquid crystal composition, especially a polymerizing liquid crystal compound.

BRIEF DESCRIPTION OF THE DRAWINGS

Fig. 1 is a plan view showing the absorption axis of a polarizer, the alignment direction of a liquid crystal cell and the slow axis of an optical film in a semitransmission-type ECB-mode liquid crystal display device of the invention.
Fig. 2 is a graph showing the relationship between a polar angle and a circular retardance.
Fig. 3 is a graph showing the relationship between the distance from the surface of the film of Example 1 and Comparative Example 1 kept in contact with a touch roll (touch surface) in the film thickness direction, and the extinction position thereof.
Fig. 4 shows polarization microscope photographs of optical films under crossed Nicols, in which (A) to (D) each indicate the extinction position under rotation of 10°, 60°, 70° and 80°, respectively, of the film of Example 1, and (a) to (d) each indicate the extinction position under rotation of 10°, 60°, 70° and 80°, respectively, of the film of Comparative Example 1.
Fig. 5 shows polarization microscope photographs of films under crossed Nicols, in which (A) to (D) each indicate the extinction position under rotation of 10°, 60°, 70° and 80°, respectively, of the film of Comparative Example 9.
Fig. 6 includes graphic views showing the relationship of the rotation angle of crossed Nicols polarizers and the extinction position of a film, in which (A) indicates the extinction position of a film of the invention, (B) indicates the extinction position of a conventional uniaxially-stretched film, (C) indicates the extinction position of a conventional tilt alignment film, and (D) indicates the rotation angle of crossed Nicols polarizers.

Fig. 7 is a graphic view showing a nip-pressing unit where the melt fed from a die is given to the center part nip-pressed by the chill roll and the touch roll thereof in the production method of the invention.

Fig. 8 is a graphic view showing an embodiment of a nip-pressing unit comprising a baffle plate.

In the drawings, 10 is die, 11 is touch roll, 12 is chill roll, 13 is lip control volt, 14 is a composition containing a thermoplastic resin, 15 is front wind-shielding plate, 16 is back wind-shielding plate, and 17 is side wind-shielding plate.

BEST MODE FOR CARRYING OUT THE INVENTION

The invention is described in more detail hereinunder. In this description, the numerical range expressed by the wording "a number to another number" means the range that falls between the former number indicating the lowermost limit of the range and the latter number indicating the uppermost limit thereof. MD as referred to in this description means "machine direction of film". In the invention, "composition containing a thermoplastic resin" and "film comprising a thermoplastic resin" mean that the composition and the film contain a thermoplastic resin capable of being melt-casted for film formation in an amount of at least 50%, not substantially containing a polymerizing liquid crystal compound. In the invention, "mass %" means equal to "weight %", and "% by mass" means equal to "% by weight".

[Film]

(Retardation in in-plane direction Re, retardation in thickness direction Rth)

The film of the invention contains a thermoplastic resin and has a tilt direction, and also satisfies the following formulae (II) and (III):

$$20\ \text{nm} \leq Re[0°] \leq 300\ \text{nm} \qquad (II),$$

$$5\ \text{nm} \leq |Re[+40°] - Re[-40°]| \leq 300\ \text{nm} \qquad (III),$$

wherein Re[0°] means a retardation measured in the normal direction of the film plane at a wavelength of 550 nm, Re [+40°] means a retardation measured in the direction tilted by 40° from the normal line of the film plane to the tilt direction, and Re[-40°] means and the retardation measured in the direction tilted by -40° from the normal line of the film plane to the tilt direction.

In this description, "direction tilted by θ° from the normal line of the film plane" is defined to be the direction tilted by θ° from the normal direction of the film plane to the tilt direction of the film existing in the film plane. Specifically, the normal direction of the film plane is the direction in which the tilt angle (θ) is 0°, and any direction in the film plane is the direction in which the tilt angle (θ) is 90°. The measurement direction for Re[+40°] and the measurement direction for Re [-40°] are symmetrical with respect to the normal line of the film.

In the film of the invention, the in-plane retardation Re[0°] is from 20 to 300 nm, preferably from 60 to 300 nm, more preferably from 60 to 250 nm, even more preferably from 60 to 200 nm, still more preferably from 80 to 180 nm. The film of the invention satisfies |Re[+40°] - Re[-40°]| of from 5 to 300 nm, preferably from 40 to 300 nm, more preferably from 60 to 250 nm, even more preferably from 60 to 200 nm, still more preferably from 80 to 180 nm.

Preferably, the thickness-direction retardation Rth of the film of the invention is from 40 to 500 nm, more preferably from 40 to 350 nm, even more preferably from 40 to 300 nm.

Also preferably, the film of the invention satisfies all the following formulae (V) to (VII):

$$60\ \text{nm} \leq Re[0°] \leq 200\ \text{nm} \qquad (V),$$

$$60\ \text{nm} \leq |Re[+40°] - Re[-40°]| \leq 250\ \text{nm} \qquad (VI),$$

$$40\ nm \le Rth \le 350\ nm \quad (VII).$$

The film of which |Re[+40°] - Re[-40°]|, Re[0°] and Rth satisfy the above-mentioned preferred ranges can be produced according to the production method of the invention to be mentioned below. When the optical film having the preferred optical properties is utilized for optical compensation in TN-mode, ECB-mode or OCB-mode liquid crystal display devices, it contributes toward improving the viewing angle characteristics of the devices and broadening the viewing angle thereof.

Preferably, the difference between the in-plane retardation of the film at a wavelength of 550 nm, Re[0°](550 nm), and the in-plane retardation thereof at a wavelength of 450 nm, Re[0°](450 nm), or that is, Re [0°] (550 nm) - Re [0°] (450 nm) is from -10 to 60 nm, more preferably from 0 to 50 nm, even more preferably from 10 to 40 nm.

Preferably, the thickness of the film of the invention is at most 200 μm, more preferably at most 100 μm. For use in liquid crystal displays and others, the thickness of the film is preferably at most 80 μm from the viewpoint of reducing the thickness of the devices, more preferably at most 60 μm, even more preferably at most 40 μm. According to the production method of the invention, such thin films can be produced, and this is one advantage of the invention over prior art techniques.

The fluctuation in Re[0°], Re[+40°] and Re[-40°] brings about display unevenness in liquid crystal display devices, and therefore, the fluctuation is preferably smaller. Concretely, the fluctuation in Re[0°], Re[+40°] and Re[-40°] is preferably within ± 3 nm, more preferably within ± 1 nm. Similarly, the fluctuation in the slow axis angle also brings about display unevenness, and therefore the fluctuation is preferably smaller. Concretely, the angle fluctuation in the slow axis is preferably within + 1°, more preferably within ± 0.5°, even more preferably within ± 0.25°.

In the description, Re[0°] (unit: nm) and Rth (unit: nm) each indicate retardation in plane and retardation along thickness direction of an optically-anisotropic layer, a film, a laminate or the like.

Re [0°] is measured by applying a light having a wavelength of 590 nm in the normal direction of the film, using KOBRA-21ADH or WR (by Oji Scientific Instruments). Re at a wavelength of λ nm may be calculated by changing a wavelength selecting filter manually and measuring the retardation value at a wavelength of λ nm, or by measuring retardation value at any wavelength and converting it to the retardation value at a wavelength of λ nm by appropriate program or the like.

When a film to be tested is represented by a uniaxial or biaxial refractive index ellipsoid, then its Rth is calculate according to the method mentioned below.

With the in-plane slow axis (determined by KOBRA 21ADH or WR) taken as the inclination axis (rotation axis) of the film (in case where the film has no slow axis, the rotation axis of the film may be in any in-plane direction of the film), Re of the film is measured at 11 points in all thereof, from -50° to +50° relative to the normal direction of the film at intervals of 10°, by applying a light having a wavelength of 550 nm from the inclined direction of the film.

With the in-plane slow axis from the normal direction taken as the rotation axis thereof, when the film has a zero retardation value at a certain inclination angle, then the symbol of the retardation value of the film at an inclination angle larger than that inclination angle is changed to a negative one, and then applied to KOBRA 21ADH or WR for computation.

With the slow axis taken as the inclination axis (rotation axis) (in case where the film has no slow axis, the rotation axis of the film may be in any in-plane direction of the film), the retardation values of the film are measured in any inclined two directions; and based on the data and the mean refractive index and the inputted film thickness, Rth may be calculated according to the following formulae (I) and (II): (I) :

(I):

$$Re(\theta) = \left[ nx - \frac{ny \times nz}{\sqrt{\left\{ ny \sin\left(\sin^{-1}\left(\frac{\sin(-\theta)}{nx}\right)\right)\right\}^2 + \left\{ nz \cos\left(\sin^{-1}\left(\frac{\sin(-\theta)}{nx}\right)\right)\right\}^2}} \right] \times \frac{d}{\cos\left\{\sin^{-1}\left(\frac{\sin(-\theta)}{nx}\right)\right\}}$$

$$(II):\ Rth = \{(nx + ny)/2 - nz\} \times d$$

wherein Re(θ) means the retardation value of the film in the direction inclined by an angle θ from the film normal direction; nx means the in-plane refractive index of the film in the slow axis direction; ny means the in-plane refractive index of the film in the direction vertical to nx; nz means the refractive index of the film vertical to nx and ny; and d is a thickness of the film.

When the film to be tested can not be represented by a uniaxial or biaxial index ellipsoid, or that is, when the film does not have an optical axis, then its Rth may be calculated according to the method mentioned below.

With the in-plane arbitrary inputted direction (capable to be input to KOBRA 21ADH or WR) taken as the inclination axis (rotation axis) of the film, Re of the film is measured at 11 points in all thereof, from -50° to +50° relative to the normal direction of the film at intervals of 10°, by applying a light having a wavelength of 550 nm from the inclined direction of the film. Based on the thus-determined retardation data of Re (λ), the mean refractive index and the inputted film thickness, Rth(λ) of the film is calculated with KOBRA 21ADH or WR.

The mean refractive index may be used values described in catalogs for various types of optical films. When the mean refractive index has not known, it may be measured with Abbe refractometer. The mean refractive index for major optical film is described below: cellulose acetate (1.48), cycloolefin polymer (1.52), polycarbonate (1.59), polymethylmethacrylate (1.49) and polystyrene (1.59).

The mean refractive index and the film thickness are inputted in KOBRA 21ADH or WR, nx, ny and nz are calculated therewith. From the thus-calculated data of nx, ny and nz, Nz = (nx-nz)/(nx-ny) is further calculated.

Re(θ), Rth and a refractive index are measured at a wavelength of 550 nm without any remarks in this invention.

In this description, Re[0°], Re [+40°] and Re[-40°] of the film means the retardation value measured in the normal direction of the film (at a tilt angle of 0°), the retardation value measured in the direction tilted by 40° from the normal line to the tilt direction (at a tilt angle of 40 degrees), and the retardation value measured in the direction tilted by -40° from the normal line to the tilt direction (at a tile angle of -40 degrees), respectively, at a wavelength of 550 nm.

The tilt direction is determined as follows:

(1) The slow axial direction in the film plane is taken as 0°, and the fast axial direction in the film plane is taken as 90°. A temporary tilt direction is set at intervals of 0.1° between 0° and 90°.

(2) Re[+40°] and Re[-40°] are measured in the directions tilted by +40° and -40° from the normal line of the film to each temporary tilt direction, and |Re[+40°] - Re[-40°]| of each temporary tilt direction is computed.

(3) The direction in which the |Re [+40°] - Re [-40°]| is the largest is taken as the tilt direction.

That is, in the invention, "having a tilt direction" means existing a direction where the |Re[+40°] - Re[-40°]| is the largest.

In this description, Rth of the film is computed with KOBRA 21ADH or WR in the tilt direction taken as the inclination axis (rotation axis) of the film.

The fluctuation in Re[0°], Re[+40°] and Re[-40°] may be determined as follows. Ten points are randomly sampled in the center part of the film, as spaced from each other by at least 2 mm, and Re[0°], Re[+40°] and Re[-40°] are measured at the sampled sites according to the method mentioned in the above. The difference between the maximum value and the minimum value is taken as the fluctuation in Re[0°], Re [+40°] and Re[-40°] of the film. In the invention, the average of the data at those ten sites is taken as Re[0°], Rye[+40°] and Re[-40°].

The fluctuation in the slow axis and the Rth to be mentioned below may be determined similarly to the above.

(Extinction Position)

The film of the invention is an optical film comprising a thermoplastic film and having a tilt direction, and is characterized in that, when a sliced section of the film having both a tilt direction and a thickness direction in the plane thereof is placed between two polarizers set in the crossed Nicols configuration, and the two crossed Nicols polarizers are rotated within a range of from 0° to 90° while irradiated with light in the direction perpendicular to the polarizer plane, and when the sliced section is analyzed sequentially from one end to the other end thereof in the thickness direction, then a first detected extinction angle differs from a last detected extinction angle by over 3°.

In this description, a distance from one end of the sliced section in the thickness direction means the distance from one end of the sliced section toward the thickness direction.

The extinction angle means, when the sliced section is rotated within a range of from 0° to 90° under crossed Nicols and when its brightness change is detected, the angle at which the sliced section is the darkest.

The film of the invention is preferably such that, when it is put between two polarizers set in the crossed Nicols configuration and the polarizers are rotated within a range of from 0° to 90°, and when the sliced section is analyzed sequentially from one end to the other end thereof in the thickness direction, then a first detected extinction angle differs from a last detected extinction angle by over 5°, more preferably over 10°.

Also preferably, the extinction angle of the film of the invention, when analyzed under the above condition,

rapidly varies relative to the direction in the film thickness direction. For example, preferably, the extinction angle varies at least 0.2° per 1 μm of the film thickness, more preferably at least 1° per 1 μm of the film thickness, even more preferably at least 5° per 1 μm of the film thickness.

The film of the invention shows the extinction angle varying at the part of the sliced section of which the birefringence is not substantially 0, and therefore when it is used in liquid crystal displays, it exhibits an excellent viewing angle compensation capability. In this description, the wording "the birefringence is not substantially 0" means that, when a sliced section is analyzed with a polarization microscope and when its birefringence data are compared with those in an interference color chart, the film orientation degree is at least $2 \times 10^{-5}$.

Preferably, the film of the invention has plural extinction positions at different angles within a range of more than 0° to 90°, or at different angles within a range of from 0° to less than 90°, depending on the distance in the thickness direction from one end of the sliced section. More preferably, the film has extinction positions at different angles within a range of from 5° to less than 90°, even more preferably at different angles within a range of from 5° to less than 85°.

Concretely, the extinction angle of the film can be determined, for example, according to the following method.

(1) A film is sampled to give a piece of 5 mm (parallel to the tilt direction) × 10 mm (perpendicular to the tilt direction).
(2) The sample film is smoothed with a microtome (Leica's RM2265) on the surface of one end parallel to the tilt direction thereof.
(3) This is cut with a razor (Nisshin EM's single-edge trimming razor), on the surface spaced by 500 μm from the smoothed surface, in parallel to the tilt direction, to prepare a sliced section containing both the tilt direction and the thickness direction in the film plane.
(4) The sliced section is placed between two polarizers set under crossed Nicols, and analyzed with a polarization microscope (Nikon Corporation's Eclipse E600POL) for the extinction change in the film thickness direction (darkest under crossed Nicols). Concretely, the sliced section is disposed in parallel to the two polarizers, then the two polarizers are set and fixed under crossed Nicols,, and the two crossed Nicols polarizers are rotated at arbitrary intervals (for example, 1°) within a range of from 0° to 90° with checking for the extinction varying in the sliced section.

The light source in the polarization microscope analysis is not specifically defined, but is preferably a white light source. The extinction angle determination is not specifically defined so far as it is attained under crossed Nicols. Preferably, based on the images taken with the polarization microscope under crossed Nicols, the extinction angle is determined. The sliced section is disposed in parallel to the absorption axis-containing plane of each polarizer.

Fig. 6 includes graphic views of polarization microscope images taken with a film of the invention (A), a conventional uniaxially-stretched film (B) and a conventional tilt-alignment film (C). For simply describing the characteristics of the film of the invention, the film is divided into four layers in the images. However, the film of the invention is not limited to the embodiment composed of four layers. As is known from the photographic pictures of Fig. 4 of the invention, the film of the invention comprises continuous layers. It should be noted that Fig. 6 includes really graphic views of photographic images. The conventional stretched film was produced by forming an unstretched film not according to touch roll film formation, and then stretching it by 2. 0 times with a tenter stretcher at Tg + 5°C.

In Fig. 6, the black part means a darkest part under crossed Nicols, and the lower dot density means a larger brightness. The center (B) includes graphic views of microscopic images of a sliced section of a conventional stretched film, in which the extinction changes uniformly in the thickness direction, and the film has two extinction angles at 0° and 90°. The right (C) includes graphic views of microscopic images of a conventional tilt alignment film produced based on the process of JP-A 6-222213 and 2007-38646, in which the extinction varies uniformly in the thickness direction, and the film has an extinction angle at about 15°. Different from these, the left (A) is a film of the invention, surprisingly in which the extinction does not vary uniformly in the thickness direction and the film has plural extinction angles within a range of from 0° to 90°.

The actual polarization microscope images do not have the definite four-layer constitution as in Fig. 6, but have continuous layers formed in the film. Since the layer constitution could not be analyzed over the resolution of the microscope used, in the invention, the extinction varying in the thickness direction of films may be determined in the manner of the following (i) and (ii). The film of the invention can be determined as to whether it satisfies the following condition (iii).

(i) Polarization microscope images taken at intervals of 1° within a range of from 0° to 90° are divided into 20 divisions in the thickness direction (for example, into 5 μm pieces from a 100-μm thick film), and these divisions are circumscribed sequentially from the surface of one side.
(ii) The images taken within a range of from 0° to 90° are analyzed for the brightness change in every division, and within the range of from 0° to 90°, the angle at which the image is the darkest is taken as the extinction angle.
(iii) The test piece is checked as to whether or not the extinction angle in at least two divisions is over 3°.

The invention is characterized in that the film has a part having a maximum birefringence inside the film. In the

invention, the wording "inside the film" indicates the part of from 3- to 18-divisions of the above 20-divided portions, especially the part of from 5- to 15-divisions thereof.

(Circular Retardance)

The film of the invention is a film comprising a thermoplastic resin, and is characterized in that, in the plane containing a direction perpendicular to the film tilt direction and the normal line of the film, the circular retardance measured in the direction tilted by 40° from the normal line at a wavelength of 550 nm is at least 5 nm. The circular retardance of an optical film is computed by determining the tilt angle dependence of the optical characteristics of the film in the plane containing the direction (y axis) perpendicular to the tilt direction and the normal line (z axis), using a Muller matrix polarimeter by AXOMETRICS (USA).

In general, in an ECB, OCB or TN cell, the tilt angle of liquid crystal molecules changes, and therefore the cell has a circular retardance. Therefore, for viewing angle compensation in the liquid crystal cell, preferably, the circular retardance is also compensated. In this connection, the film of the invention differs from the conventional films produced in the above-mentioned JP-A 6-222213, JP-A 2003-25414 and JP-A 2007-38646, and surprisingly its circular retardance is at least 5 nm, and therefore, the film enables effective viewing angle compensation. Preferably, the circular retardance range of the film is on the same level as that of the liquid crystal cell. Concretely, it is preferably from 5 nm to 500 nm, more preferably from 10 nm to 300 nm, even more preferably from 10 nm to 100 nm.

(Polarization Index)

The polarization index of a film may be defined according to the formula (2) in Journal of Applied Physics, 98, 016106 (2005). Concretely, it is determined as follows: A film is inserted between polarizers in such a manner that the in-plane slow axis of the film could be parallel to the absorption axis of the polarizers, then the polarizers are irradiated with light in the direction perpendicular to the polarizer surface, and the crossed Nicols brightness where the polarizers are under crossed Nicols and the parallel Nicols brightness where the polarizers are under parallel Nicols are measured. The data are put into the following formula to give the polarization index.

$$\text{Polarization index} = 2 \times (\text{crossed Nicols brightness}) / (\text{parallel Nicols brightness}).$$

A larger polarization index means the presence of light leakage through the crossed Nicols polarizers, and when the film of the type is used in liquid crystal displays, it causes contrast reduction. As shown in Examples given below, surprisingly, the film of the invention has a smaller polarization index by from 10 to 100 times than conventional liquid crystal-coated viewing angle compensation films, and when it is used in liquid crystal displays, it may bring about contrast increase by at least 50%. Preferably, the polarization index is substantially from $1.0 \times 10^{-4}$ to $1.0 \times 10^{-6}$, more preferably from $1.0 \times 10^{-4}$ to $5.0 \times 10^{-5}$, most preferably 0.

In addition to having the tilt structure and the circular retardance mentioned above, the film of the invention has such a reduced polarization index, and therefore, the film attains both viewing angle compensation and contrast increase in liquid crystal display devices, and this is another advantage of the film of the invention differing from conventional films.

(Residual Solvent Amount)

Preferably, the film of the invention does not substantially contain a residual solvent. More preferably, the residual solvent amount in the film is less than 0.01% by mass relative to the film weight from the viewpoint of reducing the polarization index of the film. Even more preferably, the residual solvent amount is less than 0.008% by mass, still more preferably less than 0.005% by mass. In this description, the solvent is liquid at 25°C and has a molecular weight of from 20 to 200.

The method of measuring the residual solvent amount is not specifically defined. For example, a sample of the film is dissolved in a solvent to be tested, and the resulting solution may be analyzed through GC. Not specifically defined, the solvent in which the film sample is dissolved may be any one capable of dissolving the thermoplastic resin constituting the film. For example, for cellulose acylate films, polycarbonate films and acrylic films, usable are methyl acetate, dichloromethane, acetone, etc. For cycloolefin (COC, COP) films, usable are n-hexane, cyclohexane, toluene, xylene, etc.

(Surface Roughness)

Preferably, the film of the invention has a surface roughness Ra of at most 200 nm from the viewpoint of the adhesiveness thereof to polarizers, and for reducing the polarization index thereof. More preferably, the surface roughness Ra is at most 100 nm, even more preferably at most 30 nm.

(Thermoplastic Resin)

Not specifically defined, the thermoplastic resin for use in the invention may be any one having the above-mentioned optical properties. Preferably, the glass transition temperature (hereinafter this may be referred to as "Tg") of the thermoplastic resin is from -30 to 230°C, more preferably from 50 to 200°C, even more preferably from 60 to 170°C.

The glass transition temperature of the thermoplastic resin may be determined as follows: Using a differential scanning calorimeter (DSC), a resin sample is put into a sample pan, this is heated in a nitrogen current from 30°C to 300°C at 10°C/min (1st run), then cooled to 30°C at -10°C/min, and then again heated from 30°C to 300°C at 10°C/min (2nd run). In the 2nd run, the temperature at which the base line begins to deviate from the low-temperature side is taken as the glass transition temperature (Tg) of the film.

Preferably, the thermal decomposition temperature (Td) of the thermoplastic resin is not lower than 300°C, more preferably not lower than 260°C, even more preferably not lower than 220°C.

The melt viscosity of the thermoplastic resin at the extrusion temperature to be mentioned below is preferably from 10 to 10000 Pa.s, more preferably from 100 to 5000 Pa·s, even more preferably from 100 to 3000 Pa.s.

The peeling load from HCr of the thermoplastic resin at (Tg+100°C) is preferably at most 120 N, more preferably at most 100 N, even more preferably at most 80 N.

The birefringence expression time of the thermoplastic resin at Tg to (Tg+100) °C is preferably not longer than 2 seconds, more preferably not longer than 1 second, even more preferably not longer than 0.5 seconds.

The birefringence relaxation time of the thermoplastic resin at Tg to (Tg+100)°C is preferably is not shorter than 0.5 seconds, more preferably not shorter than 1 second, even more preferably not shorter than 2 seconds.

The thermal conductivity at 25°C of the thermoplastic resin is preferably from 0.01 to 10 W/m·k, more preferably from 0.1 to 10 W/m·k, even more preferably from 0.1 to 1 W/m.k.

The surface tension at 25°C of the thermoplastic resin is preferably from 10 to 60 mN/m, more preferably from 20 to 50 mN/m, even more preferably from 25 to 50 mN/m.

The absolute value of the intrinsic birefringence of the thermoplastic resin is preferably from 0.001 to 0.2, more preferably from 0.001 to 0.11, even more preferably from 0.002 to 0.05.

The refractive index of the thermoplastic resin is preferably from 1.35 to 1.77, more preferably from 1.40 to 1.65, even more preferably from 1.45 to 1.60.

The light transmittance of the thermoplastic resin (test method: ISO 13468-2) is preferably from 70 to 95%, more preferably from 80 to 95%, even more preferably from 90 to 95%.

The film haze of the thermoplastic resin is preferably at most 3.0%, more preferably at most 2.0%, even more preferably at most 1.0%.

The impurities having a diameter of at least 50 μm in the thermoplastic resin are preferably in an amount of at most 200 grains/$cm^2$, more preferably at most 100 grains/$cm^2$, even more preferably at most 50 grains/$cm^2$.

The modulus of elasticity of the thermoplastic resin is preferably from 500 to 10000 MPa, more preferably from 1000 to 8000, even more preferably from 1500 to 7000 MPa.

The elongation at break of the thermoplastic resin is preferably at least 1%, more preferably at least 3%, even more preferably at least 4%.

In case where the film is produced according to a melt extrusion method, the thermoplastic resin to be used preferably satisfies Tm < Td where Tm is the melting point of the resin and Td is the thermal decomposition temperature thereof. More preferably, the resin has good shapability in melt extrusion. From that viewpoint, preferred are cyclic olefin resins, cellulose acetate resins, polycarbonate resins, polyesters, polyolefins such as transparent polyethylene and transparent polypropylene, polyarylates, polysulfones, polyether sulfones, maleimide copolymers, transparent nylons, transparent fluororesins, transparent phenoxy resins, polyether imides, polystyrenes, acrylic resins, styrenic resins, etc. The film may contain one of such resins or two or more different resins. Preferably, the film of the invention comprises at least one type of cyclic olefin resins, cellulose acylate resins, polycarbonate resins, styrenic resins and acrylic resins. Preferably, the cyclic olefin resins are those produced through addition polymerization.

In the film of the invention, the concentration of the thermoplastic resin is preferably uniform in the direction of the thickness of the film. In case where the resin of the invention contains additives to be mentioned below, preferably, the concentration of the additive is also uniform in the film thickness direction. To that effect, the film composition is preferably uniform as a whole since the polarization index of the film is reduced and, when the film used in liquid crystal displays, it may enhance the front contrast of the panel.

In particular, cellulose acylate resins, cyclic olefin resins and polycarbonate resins having a positive intrinsic birefringence are preferred, because, when shear deformation is given thereto between two rolls, they may form a film in which the slow axis is in the tilt direction and which satisfies |Re[+40°] - Re[-40°]| > 0. For example, when two rolls are disposed in parallel to the die outlet port, the tilt direction is the same as the machine direction of the film.

When acrylic resins or styrenic resins having a negative intrinsic birefringence are processed as in the above, then the fast axis of the formed film is in the tilt direction and the film may satisfy |Re[+40°] - Re[-40°]| > 0.

In case where the film of the invention is used in liquid crystal display devices as a viewing angle compensation film therein, then the above-mentioned, positive or negative birefringence-having resins may be suitably selected and used in consideration of the characteristics of the liquid crystal display devices and of the workability of polarizers.

Examples of the cyclic olefin resins usable in the invention include norbornene resins to be obtained through polymerization of norbornene compounds. The resins may be produced according to any polymerization method of ring-opening polymerization or addition polymerization.

Addition polymerization and cyclic olefin resins obtained by it are described, for example, in Japanese Patents 3517471, 3559360, 3867178, 3871721, 3907908, 3945598, JP-T 2005-527696, JP-A 2006-28993, 2006-11361, WO2006/004376, WO2006/030797. Especially preferred are those described in Japanese Patent 3517471.

Ring-opening polymerization and cyclic olefin resins obtained by it are described, for example, in WO98/14499, Japanese Patents 3060532, 3220478, 3273046, 3404027, 3428176, 3687231, 3873934, 3912159. Especially preferred are those described in WO98/14499 and Japanese Patent 3060532.

Of such cyclic olefin resins, more preferred are those to be produced through addition polymerization from the viewpoint of the birefringence expressibility and the melt viscosity thereof; and for example, "TOPAS #6013" (by Polyplastics) can be used.

Examples of cellulose acylate resins usable in the invention include cellulose acylates where at least a part of three hydroxyl groups in the cellulose unit are substituted with an acyl group. The acyl group (preferably acyl group having from 3 to 22 carbon atoms) may be any of an aliphatic acyl group or an aromatic acyl group. In particular, preferred are cellulose acylates having an aliphatic acyl group, more preferably an aliphatic acyl group having from 3 to 7 carbon atoms, even more preferably an aliphatic acyl group having from 3 to 6 carbon atoms, even more preferably an aliphatic acyl group having from 3 to 5 carbon atoms. One molecule of the resin may have two or more different types of acyl groups. Preferred examples of the acyl group include an acetyl group, a propionyl group, a butyryl group, a pentanoyl group, a hexanoyl group. Of those, more preferred are cellulose acylates having one or more selected from an acetyl group, a propionyl group and a butyryl group; even more preferred are cellulose acylates having both an acetyl group and a propionyl group (CAP). CAP is preferred since its production is easy and since its extrusion stability is good.

In case where the film of the invention is produced according to a melt extrusion method including the production method of the invention, the cellulose acylate to be used preferably satisfies the following formulae (S-1) and (S-2). The cellulose acylate satisfying the following formulae has a low melting temperature and is improved in point of the melting behavior thereof, and is therefore excellent in the melt extrusion film formation.

$$(S\text{-}1)\ 2.0 \le X+Y \le 3.0,$$

$$(S\text{-}2)\ 0.25 \le Y \le 3.0.$$

In formulae (S-1) and (S-2), X means the degree of substitution with acetyl group of the hydroxyl group in cellulose; Y means the total degree of substitution with acyl group of the hydroxyl group in cellulose. "Degree of substitution" as referred to herein means the ratio of substitution of the hydrogen atom of the 2-, 3- and 6-position hydroxyl groups in cellulose. In case where the hydrogen atom of all the 2-, 3- and 6-position hydroxyl groups is substituted with an acyl group, the degree of substitution is 3.

More preferably, the cellulose acylate for use in the invention satisfies the following formulae (S-3) and (S-4):

$$(S\text{-}3)\ 2.3 \le X+Y \le 2.95,$$

$$(S\text{-}4)\ 1.0 \le Y \le 2.95.$$

Even more preferably, the cellulose acylate satisfies the following formulae (S-5) and (S-6):

$$(S-5)\ 2.7 \le X+Y \le 2.95,$$

$$(S-6)\ 2.0 \le Y \le 2.9.$$

The mass-average degree of polymerization and the number-average molecular weight of the cellulose acylate resin are not specifically defined. In general, the mass-average degree of polymerization is from 350 to 800 or so, and the number-average molecular weight if from 70000 to 230000 or so. The cellulose acylate resin may be produced, using an acid anhydride or an acid chloride as an acylating agent. In a most popular production method on an industrial scale, cellulose obtained from a cotton linter or a wood pulp is esterified with a mixed organic acid ingredient including an organic acid (acetic acid, propionic acid, butyric acid) or its acid anhydride (acetic anhydride, propionic anhydride, butyric anhydride) corresponding to an acetyl group or other acyl group, to produce a cellulose ester. For the method for producing a cellulose acylate satisfying the above formulae (S-1) and (S-2), referred to are the description in Hatsumei Kyokai Disclosure Bulletin (No. 2001-1745, issued on March 15, 2001, by Hatsumei Kyokai), pp. 7-12, and the methods described in JP-A 2006-45500, 2006-241433, 2007-138141, 2001-188128, 2006-142800, 2007-98917.

The polycarbonate resins usable in the invention include polycarbonates having a bisphenol A skeleton, which may be produced through reaction of a dihydroxy ingredient and a carbonate precursor in a mode of interfacial polymerization or melt polymerization. For example, preferred are those described in JP-A 2006-277914, 2006-106386, 2006-284703. For example, a commercial product "Toughlon MD1500" (by Idemitsu Kosan Company, Limited) is usable.

The styrenic resins usable in the invention include resins produced through polymerization of styrene and its derivatives, and copolymers with other resins. Not specifically defined without detracting from the effect of the invention, all known styrenic thermoplastic resins are usable herein. Especially preferred are copolymer resins capable of improving the birefringence, the mechanical strength and the heat resistance of the films.

The copolymer resins include, for example, styrene/acrylonitrile resins, styrene/acryl resins, styrene/maleic anhydride resins, and their polynary (e.g., binary, ternary) copolymers. Of those, preferred are styrene/acryl resins and styrene/maleic anhydride resin from the viewpoint of the heat resistance and the mechanical strength of the films.

Preferably, the styrene/maleic anhydride resin has a composition ratio by mass of styrene to maleic anhydride, styrene/maleic anhydride of from 95/5 to 50/50, more preferably from 90/10 to 70/30. For controlling the intrinsic birefringence of the film, the styrene resin may be preferably hydrogenated.

As one example of the styrene/maleic anhydride resins, there is mentioned Nova Chemicals Corporation' s "Daylark D332".

Also usable as the styrene/maleic anhydride is Asahi Kasei Chemicals Corporation's "Delpet 98ON" to be mentioned below.

The acrylic resins usable in the invention include resins to be obtained through polymerization of acrylic acid, methacrylic acid a derivative thereof, and their derivatives. Not specifically defined without detracting from the effect of the invention, all known methacrylic thermoplastic resins are usable in the invention.

Resins to be produced through polymerization of acrylic acid, methacrylic acid a derivative thereof include, for example, those having a structure of the following general formula (1):

(1)

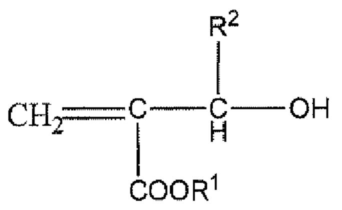

In formula (1), $R^1$ and $R^2$ each independently represent a hydrogen atom or an organic residue having from 1 to 20 carbon atoms. The organic residue is concretely a linear, branched or cyclic alkyl group having from 1 to 20 carbon atoms.

Preferred examples of the monomers to give the resins through polymerization of acrylic acid, methacrylic acid or a derivative thereof include methyl (meth)acrylate, ethyl (meth)aorylate, n-propyl (meth)acrylate, n-butyl (meth)acrylate, tert-butyl (meth)acrylate, n-hexyl (meth)acrylate, 2-chloroethyl (meth)acrylate, 2-hydroxyethyl (meth)acrylate, 3-hydroxypropyl (meth)acrylate, 2,3,4,5,6-pentahydroxyhexyl (meth)acrylate and 2, 3, 4, 5-tetrahydroxypentyl (meth) acrylate. More preferred is methyl (meth)acrylate (hereinafter this may be referred to as "MMA") from the viewpoint of the excellent heat stability of the polymers thereof. One or more of these monomers may be used either singly or as combined. The polymer may be a homopolymer of one of these monomers or a copolymer of two or more of them, or a copolymer with any other resin. From the viewpoint of elevating the glass transition temperature of the film, preferred is a copolymer with any other resin.

Of the above-mentioned acrylic copolymer resins, more preferred are those having an MMA unit (monomer unit) of at least 30% by mol of all the monomers constituting the resin. Also preferably, the resins may contain at least one unit selected from lactone ring units and maleic anhydride units, glutaric anhydride units in addition to MMA; and for example, the resins mentioned below are usable.

(1) Acrylic resin containing lactone ring unit:

Usable are those described in JP-A 2007-297615, 2007-63541, 2007-70607, 2007-100044, 2007-254726, 2007-254727, 2007-261265, 2007-293272, 2007-297619, 2007-316366, 2008-9378, 2008-76764. More preferred are resins described in JP-A 2008-9378.

(2) Acrylic resin containing maleic anhydride unit:

Usable are those described in 2007-113109, 2003-292714, 6-279546, 2007-51233 (acid-modified vinyl resins described therein), 2001-270905, 2002-167694, 2000-302988, 2007-113110, 2007-11565. More preferred are those described in JP-A 2007-113109. Also preferred are commercially-available maleic acid-modified MAS resins (e.g., Asahi Kasei Chemicals' Delpet 980N).

(3) Acrylic resin containing glutaric anhydride unit:

Usable are those described in JP-A 2006-241263, 2004-70290, 2004-70296, 2004-126546, 2004-163924, 2004-291302, 2004-292812, 2005-314534, 2005-326613, 2005-331728, 2006-131898, 2006-134872, 2006-206881, 2006-241197, 2006-283013, 2007-118266, 2007-176982, 2007-178504, 2007-197703, 2008-74918, WO2005/105918. More preferred are the resins described in JP-A 2008-74918.

Preferably, the glass transition temperature (Tg) of these resins is from 106°C to 170°C, more preferably from 110°C to 160°C, even more preferably from 115°C to 150°C.

As the thermoplastic resin for use in the invention, preferred are cyclic olefin resins of those mentioned above; more preferred are norbornene resins from the viewpoint of the birefringence expressibility and the heat resistance thereof; and even more preferred are norbornene resins produced through addition polymerization.

In case where the thermoplastic resin is a copolymer, it may be a random copolymer or a block copolymer.

(Additive)

The film of the invention may contain any other material than the above-mentioned thermoplastic resin. Preferably, the film comprises, as the main ingredient thereof, one or more thermoplastic resins. (The main ingredient is meant to indicate the material of which the blend ratio is the highest of all the constitutive ingredients of the composition, and in the embodiment where the composition contains two or more thermoplastic resins as the main ingredient thereof, the total content thereof is higher than the content of any other ingredient in the composition.) Other materials than the thermoplastic resin in the composition includes various additives, and their examples are stabilizer, UV absorbent, light stabilizer, plasticizer, fine particles and optical regulator.

Stabilizer:

The film of the invention may contain at least one stabilizer. Preferably, the stabilizer is added before or during hot melting of thermoplastic resin. The stabilizer is effective for antioxidation of film-constituting ingredients, for trapping the acids formed through decomposition, and for retarding or inhibiting the radical group-caused decomposition under light or heat. The stabilizer is effective for inhibiting degradation such as discoloration or molecular weight reduction to be caused by various types of decompositions including decomposition not as yet clarified, and also inhibiting formation of volatile ingredients. The stabilizer is required to be still effective to exhibit its function, without being decomposed at the resin melting temperature at which the resin is formed into a film. Typical example of the stabilizer includes phenol-type stabilizers, phosphite-type stabilizers, thioether-type stabilizers, amine-type stabilizers, epoxy-type stabilizers, lactone-type stabilizers, amine-type stabilizers, metal inactivators (tin-type stabilizers), etc. These are described in JP-A 3-199201, 5-1907073, 5-194789, 5-271471, 6-107854. Preferably, at lest one of phenol-type and phosphite-type stabilizers is used in the invention. Of phenol-type stabilizers, more preferred are those having a molecular weight of at least 500. Preferred phenol-type stabilizers include hindered phenol-type stabilizers.

These materials are readily available as commercial products, and are sold, for example, by the following manufacturers. Ciba Specialty Chemicals provides commercial products of Irganox 1076, Irganox 1010, Irganox 3113, Irganox 245, Irganox 1135, Irganox 1330, Irganox 259, Irganox 565, Irganox 1035, Irganox 1098, Irganox 1425WL. Asahi Denka Kogyo provides commercial products of Adekastab AO-50, Adekastab AO-60, Adekastab AO-20, Adekastab AO-70, Adekastab AO-80. Sumitomo Chemical provides commercial products Sumilizer BP-76, Sumilizer BP-101, Sumilizer GA-80. Shipro Chemical provides commercial products Seenox 326M, Seenox 336B.

As phosphite-type stabilizers, more preferred are the compounds described in JP-A 2004-182979, paragraphs [0023]-[0039]. Specific examples of phosphite-type stabilizers include compounds described in JP-A 51-70316, 10-306175, 57-78431, 54-157159, 55-13765. As other stabilizers, preferred are the materials described in detail in Hatsumei Kyokai Disclosure Bulletin (No. 2001-1745, issued on March 15, 2001, by Hatsumei Kyokai), pp. 17-22.

The phosphite-type stabilizers are preferably high-molecular ones for securing the stability thereof at high temperatures, having a molecular weight of at least 500, more preferably at least 550, even more preferably at least 600. Also preferably, the stabilizers have an aromatic ester group as at least one substituent therein. Also preferably, the phosphite-type stabilizers are triesters, more preferably not mixed with impurities of phosphoric acid, monoester or diester. In case where the stabilizer contains such impurities, preferably, the content of the impurities is at most 5% by mass, more preferably at most 3% by mass, even more preferably at most 2% by mass. For the stabilizers of the type, usable are the compounds described in JP-A 2004-182979, [0023] to [0039], and also usable are the compounds described n JP-A 51-70316, 10-306175, 57-78431, 54-157159, 55-13765. Preferred examples of phosphite-type stabilizers are mentioned below. However, the phosphite-type stabilizers for use in the invention should not be limited to these.

Asahi Denka provides commercial products of Adekastab 1178, 2112, PEP-8, PEP-24G, PEP-36G, HP-10; and Clariant provides commercial products of Sandostab P-EPQ. Also preferred for use herein are stabilizers having both phenol and phosphite moieties in one molecule. The compounds are described in detail in JP-A 10-273494, and their examples are, but not limited thereto, within the scope of the examples of the stabilizers mentioned in the above. Typically, Sumitomo Chemical provides commercial products of Sumilizer GP. Further, Sumitomo Chemical provides other commercial products of Sumilizer TPL, TPM, TPS, TDP. Asahi Denka Kogyo provides commercial products of Adekastab AO-412S.

One or more of the above-mentioned stabilizers may be used herein either singly or as combined. Not detracting from the object of the invention, the amount of the stabilizer to be in the film may be suitably determined. Preferably, the amount of the stabilizer to be added is from 0.001 to 5% by mass relative to the mass of the thermoplastic resin, more preferably from 0.005 to 3% by mass, even more preferably from 0.01 to 0.8% by mass.

UV Absorbent:

The film of the invention may contain one or more UV absorbents. The UV absorbent is preferably one excellent in the ability of absorbing UV rays having a wavelength of not longer than 380 nm from the viewpoint of antioxidation, and not so much absorbing visible rays having a wavelength of not shorter than 400 nm from the viewpoint of transparency. For example, there are mentioned oxybenzophenone-type compounds, benzotriazole-type compounds, salicylate-type compounds, benzophenone-type compounds, cyanoacrylate-type compounds, and nickel complex-type compounds. Especially preferred UV absorbents are benzotriazole-type compounds and benzophenone-type compounds. Above all, benzotriazole-type compounds are more preferred as causing little unnecessary coloration of cellulose mixed esters. These are described in JP-A 60-235852, 3-199201, 5-1907073, 5-194789, 5-271471, 6-107854, 6-118233, 6-148430, 7-11055, 7-11056, 8-29619, 8-239509, 2000-204173.

The amount of the UV absorbent to be added is preferably from 0.01 to 2% by mass of the thermoplastic resin, more preferably from 0.01 to 1.5% by mass.

Light Stabilizer:

The film of the invention may contain one or more light stabilizers. The light stabilizer includes hindered amine-type light stabilizers, HALS compounds, more concretely, 2,2,6,6-tetraalkylpiperidine compounds and their acid addition salts and their complexes with metal compounds, as in USP 4, 619, 956, columns 5-11, and USP 4, 839, 405, columns 3-5. Regarding these, Asahi Denka provides commercial products of Adekastab LA-57, LA-52, LA-67, LA-62, LA-77; and Ciba Speciality Chemicals provides commercial products of TINUVIN 765, 144.

One or more of these hindered amine-type light stabilizers may be used either singly or as combined. Needless-to-say, the hindered amine-type light stabilizer may be used, as combined with other additives such as plasticizer,

stabilizer, UV absorbent, etc.; and it may be incorporated as a part of the molecular structure in these additives. The amount of the light stabilizer may be determined within a range not detracting from the effect of the invention, and in general, it may be from 0.01 to 20 parts by mass or so relative to 100 parts by mass of the thermoplastic resin, more preferably from 0.02 to 15 parts by mass or so, even more preferably from 0.05 to 10 parts by mass or so. The light stabilizer may be added in any stage of preparing a melt of thermoplastic resin composition, and for example, it may be added in the final step of that.

Plasticizer:

The film of the invention may contain a plasticizer. Adding a plasticizer to the film is favorable from the viewpoint of film reformation, for example, for improving the mechanical properties of the film, imparting flexibility to the film, imparting water absorbability to the film or reducing the moisture permeability of the film. In case where the film of the invention is produced according to a melt formation method, a plasticizer may be added to the film for the purpose of depressing the melting temperature of the film-constituting material through plasticizer addition thereto, than the glass transition temperature of the thermoplastic resin used, or for the purpose of reducing the viscosity of the resin composition at the same heating temperature than that of the thermoplastic resin to which the plasticizer is not added. For example, for the film of the invention, preferably used are plasticizers selected from phosphate derivatives and carboxylate derivatives. In addition, also preferably used are polymers produced through polymerization of ethylenic unsaturated monomers and having a weight-average molecular weight of from 500 to 10000, as in JP-A 2003-12859, as well as acrylic polymers, acrylic polymers having an aromatic ring in the side branches, and acrylic polymers having a cyclohexyl group in the side branches.

Fine Particles:

The film of the invention may contain fine particles. The fine particles include fine particles of inorganic compounds, and fine particles of organic compounds, and any these are usable herein. The mean primary particle size of the fine particles to be in the thermoplastic resin for use in the invention is preferably from 5 nm to 3 μm from the viewpoint of reducing the haze of the film, more preferably from 5 nm to 2.5 μm, even more preferably from 10 nm to 2.0 μm. The mean primary particle size of fine particles as referred to herein is determined as follows: A thermoplastic resin composition is observed with a transmission electronic microscope (having a magnification of from 500,000 to 1,000,000 powers), and the primary particle size of 100 particles is measured, and the data are averaged to be the mean primary particle size of the fine particles. The amount of fine particles to be added is preferably from 0.005 to 1.0% by mass relative to the thermoplastic resin, more preferably from 0. 01 to 0.8% by mass, even more preferably from 0.02 to 0.4% by mass.

Optical Regulator:

The film of the invention may contain an optical regulator. The optical regulator includes a retardation regulator, for which, for example, usable are those described in JP-A 2001-166144, 2003-344655, 2003-248117, 2003-66230. The optical regulator, if added to the film, may control the in-plane retardation (Re) and the thickness-direction retardation (Rth) of the film. Preferably, the amount of the optical regulator to be added is from 0 to 10% by mass, more preferably from 0 to 8% by mass, even more preferably from 0 to 6% by mass.

On the other hand, the film of the invention comprises a thermoplastic resin, and preferably, it does not substantially contain a polymerizing liquid crystal compound generally for use in a film produced through coating, in order that it can express optical compensation capability as it has a single-layer constitution. The polymerizing liquid crystal compound as referred to in the invention is meant to indicate a liquid crystal compound, which is applied to a support, then aligned and polymerized thereon, and thereafter processed for fixation of the alignment state thereof, as in JP-A 2001-328973, 2006-227630, 2006-323069, 2007-248780. In the film of the invention, the content of the polymerizing liquid crystal compound of the type is preferably less than 10% by mass, more preferably less than 5% by mass.

The polymerizing liquid crystal compound includes, for example, those described in JP-A 2001-328973, [0008] to [0034]; JP-A 2006-227630, [0017]; JP-A 2007-248780, [0014] to [0097].

[Method for Producing Film]

The production method for the film of the invention comprises leading a melt of a composition containing a thermoplastic resin to pass between a first nip-pressing surface and a second nip-pressing surface of a nip-pressing unit, whereby the melt is continuously nip-pressed therebetween to form a film, wherein the pressure to be given to the melt by the nip-pressing unit is from 20 to 500 MPa, and the moving speed of the first nip-pressing surface is higher than the moving speed of the second nip-pressing surface. Different from conventional methods, the method of the

invention is characterized by applying such a great pressure to the resin melt. Film formation under the condition gives the film of the invention characterized by satisfying the following formulae (II) and (III):

$$20\ nm \le Re[0°] \le 300\ nm \qquad (II),$$

$$5\ nm \le |Re[+40°] - Re[-40°]| \le 300\ nm \qquad (III).$$

The nip-pressing unit of which the first nip-pressing surface and the second nip-pressing surface differ in the moving speed thereof includes a combination of two rolls individually running at a different peripheral speed, a combination of a roll and a touch belt individually running at a different speed as in JP-A 2000-219752 (one-side belt system), and a combination of a belt and a belt (double-side belt system). Of those, preferred is a combination of two rolls individually running at a different peripheral speed, as capable of imparting uniform high pressure of from 20 to 500 MPa to the resin melt. The roll pressure may be measured by leading a pressure test film (e.g., FUJIFILM Corporation's middle-pressure prescale) to pass between two rolls.

The method for producing the film of the invention (hereinafter this may be referred to as "the production method of the invention") is described in detail hereinunder.

<Feeding of Melt of Thermoplastic Resin Composition>

In the production method of the invention, first, a thermoplastic resin-containing compound (hereinafter this may be referred to as "thermoplastic resin composition") is melt-extruded. The method includes a step of leading a melt of the thermoplastic resin composition to pass between a first nip-pressing surface and a second nip-pressing surface of a nip-pressing unit, and thereby continuously nip-pressing it therebetween to form a film (hereinafter this may be referred to as "nip-pressing steep"). In the nip-pressing step, the means of feeding the melt of a thermoplastic resin-containing composition to the unit is not specifically defined. For example, as a concrete means for feeding the melt, employable is an embodiment of using an extruder through which a thermoplastic resin composition is melted and extruded as a film; or an embodiment of using an extruder and a die; or an embodiment of once solidifying a thermoplastic resin into a film, then melting it with a heating means into a melt, and thereafter feeding it to a film formation step.

The film production method of the invention preferably includes the step of melt-extruding a thermoplastic resin-containing composition through a die and the step of leading the thus-extruded melt to pass between a first nip-pressing surface and a second nip-pressing surface of a nip-pressing unit, from the viewpoint of more effectively retarding the fluctuation of the optical properties of the films to be produced.

In the case where the thermoplastic resin composition is melt-extruded, preferably, the thermoplastic resin composition is pelletized before it is melt-extruded. Some commercial products of thermoplastic resin (e.g., TOPAS #6013, Toughlon MD1500, Delpet 980N, Daylark D332) are in the form of pellets; however, others not in the form of pellets may be processed according to the method mentioned below. As the thermoplastic resin for use in the method, employable are the thermoplastic resins that may be in the film of the invention, and their preferred ranges may apply to the production method.

The thermoplastic resin composition is dried, then melted in a double-screw kneading extruder at 150°C to 300°C, then extruded like noodles, and solidified and cut in air or in water, and thereby giving pellets. After melted in the extruder, the melt may be directly cut while extruded into water through a nozzle to give pellets, according to an underwater cutting method. The extruder usable for pelletization includes a single-screw extruder, a non-engaging counter-rotating double-screw extruder, an engaging counter-rotating double-screw extruder, an engaging uni-rotating double-screw extruder, etc. Preferably, the number of revolutions of the extruder is from 10 rpm to 1000 rpm, more preferably from 20 rpm to 700 rpm. The extruder retention time is preferably from 10 seconds to 10 minutes, more preferably from 20 seconds to 5 minutes.

Not specifically defined, the size of the pellets may be generally from 10 $mm^3$ to 1000 $mm^3$ or so, preferably from 30 $mm^3$ to 500 $mm^3$ or so.

Preferably, prior to feeding the melt of thermoplastic resin composition, the water content of the pellets is reduced. Preferably, the drying temperature is from 40 to 200°C, more preferably from 60 to 150°C. Accordingly, the water content is preferably reduced to at most 1.0% by mass, more preferably at most 0.1% by mass. Also preferably, the amount of the solvent in the pellets is reduced. The preferred drying temperature may be the same as that for reducing the water content. Accordingly, the residual solvent amount in the film of the invention may be controlled to fall within a preferred range. The drying may be attained in air, or in nitrogen, or in vacuum.

In case where the resin composition is melt-extruded through an extruder, the dried pellets are fed into the cylinder via the feeding port of the extruder, and kneaded and melted therein. Preferably, the inside of the cylinder comprises, for example, a feeing zone, a pressing zone, and a metering zone in that order from the side of the feeing port. The screw compression ratio of the extruder is preferably from 1.5 to 4.5; the ratio of the cylinder length to the cylinder inner diameter (L/D) is preferably from 20 to 70; and the cylinder inner diameter is preferably from 30 mm to 150 mm. The extrusion temperature of the feeding means (e.g., die) for feeding the thermoplastic resin composition (hereinafter this may be referred to as "melt temperature") may be determined depending on the melting temperature of the thermoplastic resin, and in general, it is preferably from 190 to 300°C or so. Further, for preventing the resin melt from being oxidized with the remaining oxygen in the extruder, preferably, the extruder is purged with an inert gas (e.g., nitrogen), or is degassed in vacuum via a vent.

Preferably, a filter unit with a breaker plate-type filter or a leaf-type disc filter is fitted to the system for removing impurities from the thermoplastic resin composition by filtration therethrough. The filtration may be one-stage or multi-stage filtration. Preferably, the filtration accuracy is from 15 $\mu$m to 3 $\mu$m, more preferably from 10 $\mu$m to 3 $\mu$m. Stainless steel is preferred for the filter material. The filter constitution includes knitted wire nets, and sintered metal fiber or metal powder articles (sintered filters); and preferred are sintered filters.

For increasing the thickness accuracy by reducing the melt discharge fluctuation, preferably, a gear pump is disposed between the extruder and the thermoplastic resin composition feeding means (e.g., die). Accordingly, the resin pressure fluctuation inside the thermoplastic resin composition feeding means (e.g., die) may be reduced to $\pm$ 1%. For enhancing the constant feeding capability of the gear pump, there may be employed a method of changing the number of screw revolutions to thereby constantly control the pressure before the gear pump.

In the extruder having the constitution as above, the resin composition is melted, and if desired, the resin melt is led to pass through a filter and a gear pump, and thereafter it is continuously transferred to the thermoplastic resin composition feeding means (e.g., die). The die may be in any type of a T-die, a fishtail die, or a hanger coat die. Preferably, just before the thermoplastic resin composition feeding means (e. g. , die), a static mixer may be disposed for enhancing the uniformity of the resin temperature.

In case where the feeding means is a die, the clearance at the die outlet port part (hereinafter this may be referred to as "lip gap") is generally from 1.0 to 30 times the film thickness, more preferably from 5.0 to 20 times. Concretely, it is preferably from 0.04 to 3 mm, more preferably from 0.2 to 2 mm, even more preferably from 0.4 to 1.5 mm.

In the production method of the invention, the radius of curvature at the tip of the die lip is not specifically defined, and any known die may be used in the invention.

Preferably, the die thickness is controllable within a range of from 5 to 50 mm. An automatic thickness-controlling die is also effective, for which the film thickness and the thickness deviation in the downstream area are computed, and the data are fed back to the die for thickness control thereof.

Apart from the single-layer film forming apparatus, a multilayer film forming apparatus is also usable herein.

The residence time taken by the thermoplastic resin composition to run into the extruder via the feeding port and then go out of it via the feeding means (e. g. , die) is preferably from 3 minutes to 40 minutes, more preferably from 4 minutes to 30 minutes.

<Nip-Pressing Step>

Next, the fed melt of thermoplastic resin composition is led to pass between the first nip-pressing surface and the second nip-pressing surface of a nip-pressing unit and is thereby continuously nip-pressed therebetween to form a film, which is then cooled and solidified. In this stage, preferably, the melt is released earlier from any one of the first nip-pressing surface and the second nip-pressing surface and thereafter from the other one, from the viewpoint of the production stability. In the production method of the invention, the moving speed of the first nip-pressing surface is higher than the moving speed of the second nip-pressing surface, and the surface from which the melt is released earlier than from the other may be either the first nip-pressing surface or the second nip-pressing surface; however, from the viewpoint of inhibiting formation of peel lumps, the surface from which the melt is released earlier is preferably the first nip-pressing surface (running at a higher moving speed).

In the production method of the invention, the fed melt of thermoplastic resin composition is continuously nip-pressed between the first nip-pressing surface and the second nip-pressing surface of the nip-pressing unit, to form a film according to a conventional process, in which a pressure of from 20 to 500 MPa is applied to the film-like melt between the nip-pressing surfaces to produce the film having the specific optical properties of the invention. Preferably, the pressure is from 25 to 300 MPa, more preferably from 25 to 200 MPa, even more preferably from 30 to 150 MPa.

In the production method of the invention, preferably, the ratio of the moving speed of the second nip-pressing surface to that of the first nip-pressing surface, as defined by the following formula (I), is controlled to be from 0.60 to 0.99, and a shear stress is given to the fed melt of thermoplastic resin composition while it passes through the nip-pressing unit in producing the film of the invention. The moving speed ratio in the nip-pressing unit is more preferably

from 0.60 to 0.99, even more preferably from 0.75 to 0.98.

$$\text{Moving speed ratio} = R_{2nd} / R_{1st} \qquad (I)$$

wherein $R_{2nd}$ is the moving speed of the second nip-pressing surface and $R_{1st}$ is the moving speed of the first nip-pressing surface.

When the moving speed ratio of the two nip-pressing surfaces is at least 0.60, then it is favorable since the absolute value of the difference between Re[+40°] and Re[-40°] of the obtained film can be large and can satisfy the above formula (III). When the moving speed ratio is at least 0.60, then it is also favorable since the surface of the obtained film is hardly scratched. When the moving speed ratio of the two nip-pressing surfaces is from 0. 60 to 0.99, then it is favorable since the film surface is hardly scratched and since films of good surface smoothness can be stably produced.

(Melt temperature)

In the production method of the invention, the melt temperature (temperature of the melt of thermoplastic resin composition at the outlet port of feeding means) is preferably from (Tg + 50) to (Tg + 200)°C from the viewpoint of improving the shapability of the melt of thermoplastic resin composition and of preventing the deterioration thereof, more preferably from (Tg + 70) to (Tg + 180) °C, even more preferably from (Tg + 90) to (Tg + 150)°C. Specifically, when the melt temperature is not lower than (Tg + 50)°C, then the shapability of the melt of thermoplastic resin composition is good since the viscosity of the melt can be sufficiently low; and when the temperature is not higher than (Tg + 200)°C, then the melt of thermoplastic resin composition may hardly deteriorate.

(Air Gap)

In case where a thermoplastic resin composition is fed to a nip-pressing unit through a feeding means such as a die according to the production method of the invention, the air gap (the distance from the outlet port of the feeding means to the melt landing point) is preferably as small as possible from the viewpoint of keeping the temperature of the melt staying in the air gap, and concretely, the air gap is preferably from 10 to 300 mm, more preferably from 20 to 250 mm, even more preferably from 30 to 200 mm.

(Line Speed)

In the production method of the invention, the line speed (film formation speed) is not lower than 2 m/min from the viewpoint of keeping the temperature of the melt staying in the air gap, more preferably not lower than 5 m/min, even more preferably not lower than 10 m/min. When the line speed is high, then the melt can be prevented from being cooled in the air gap and therefore more uniform shear deformation can be given to the melt while still hot in the nip-pressing unit. The line speed indicates the speed at which the melt of thermoplastic resin composition passes through the nip-pressing unit and the film traveling speed in the conveyance unit.

Preferably, in the production method of the invention, the temperature of the first nip-pressing surface and the second nip-pressing surface is set to fall between (Tg - 70°C) and (Tg + 10°C) where Tg indicates the glass transition temperature of the resin melt to be nip-pressed, more preferably between (Tg - 50°C) and (Tg + 5°C), more preferably between (Tg - 40°C) and Tg. Also preferably, the temperature is lower by from 20°C to 200°C than the temperature of the resin melt to be nip-pressed, more preferably by from 20°C to 150°C, even more preferably by from 20°C to 100°C. The temperature control may be attained by introducing a temperature-controlled liquid or vapor into the inside of nip-pressing surfaces. Further, for controlling the difference between Re[+40°] and Re[-40°], there may be made a difference between the surface temperature of the first nip-pressing surface and that of the second nip-pressing surface. Preferably, the temperature difference is from 5°C to 80°C, more preferably from 20°C to 80°C, even more preferably from 20°C to 60°C.

In the production method of the invention, the width of the film-like melt is not specifically defined, and may be, for example, from 200 to 2000 mm.

(Casting through Two Rolls)

As the method of leading a thermoplastic resin melt to pass between the first nip-pressing surface and the second nip-pressing surface of a nip-pressing unit and nip-pressing it therebetween to form a film, preferred is an embodiment of leading the resin melt to pass between two rolls (e.g., touch roll (first roll) and chill roll (second roll)). In

case where the nip-pressing unit includes two rolls individually running at a different peripheral speed, the surface of the roll running at a higher peripheral speed is the first nip-pressing surface, and the surface of the running at a lower peripheral speed is the second nip-pressing surface. In this description, when the filming system includes plural casting rolls for conveying the resin melt, the casting roll nearest to the most upstream thermoplastic resin composition feeding means (e.g., die) may be the chill roll. The preferred embodiment of the production method of the invention where two rolls are used is described below.

In the film production method of the invention, the landing point at which the melt extruded out from the above-mentioned feeding means lands is not specifically defined. The distance between the melt landing point and the perpendicular line that runs through the center point in the space at a part at which the touch roll and the casting roll are kept nearest to each other may be zero, or the two may be deviated.

The melt landing point is meant to indicate the point at which the melt extruded out from the feeding means is first brought into contact with the touch roll or the chill roll (or first lands on the roll). The center point of the space between the touch roll and the casting roll is meant to indicate the center point of the touch roll surface and the casting roll surface at the site at which the space between the touch roll and the casting roll is the narrowest.

Preferably, the surface of the two rolls (e.g., touch roll, casting roll) has an arithmetic mean height Ra of at most 100 nm, more preferably at most 50 nm, even more preferably at most 25 nm.

In the production method of the invention, the width of the two rolls is not specifically defined. The width may be freely varied in accordance with the width of the film-like melt.

In the production method of the invention, the cylinder parameter values may be suitably changed for controlling the roll pressure to fall within the above-mentioned range. The cylinder parameter values may differ depending on the resin material to be used and the materials of the two rolls. For example, when the effective width of the film-like melt is 200 mm, the value is preferably from 3 to 100 KN, more preferably from 3 to 50 KN, even more preferably from 3 to 25 KN.

In the production method of the invention, preferably, the Shore hardness of the rolls is at least 30 HS for controlling the roll pressure to fall within the above range, more preferably at least 45 HS. In the invention, the film is continuously formed while the roll pressure is kept high, and therefore, when impurities in the film or dust and others in air are led between the rolls, then the rolls may be dented or may be scratched. Accordingly, the Shore hardness of the two rolls is preferably at least 50 HS, more preferably at least from 60 to 90 HS.

The Shore hardness is determined according to a method of JIS Z 2246 where a roll is tested at 5 points in the roll width direction and at 5 points in the roll peripheral direction and the data are averaged.

Regarding their material, preferably, the two rolls are made of metal from the viewpoint of attaining the above-mentioned Shore hardness, more preferably they are made of stainless metal. Also preferred are surface-plated rolls. The Shore hardness of the rolls may be attained according to a method of quenching/tempering, for example, as in Metal Data Book (edited by the Japan Institute of Metals), Chap. 3. Preferably, the two rolls are made of metal, as their surface roughness is low and therefore the surface of the produced film is hardly scratched. On the other hand, rubber rolls and rubber-lined metal rolls are also usable with no limitation so far as they can attain the above-mentioned high pressure between two rolls.

As the touch roll, for example, usable are those described in JP-A 11-314263, 2002-36332, 11-235747, WO97/28950, JP-A 2004-216717, 2003-145609.

In the production method of the invention, preferably, the peripheral speed ratio of the two rolls between which a film-like melt is led to pass is controlled, whereby a shear stress is given to the resin melt while it passes through the two rolls to give the film of the invention.

In producing the film of the invention, any of the two rolls may run at a higher speed. When the running speed of the touch roll is low, a bank (an excessive melt staying on the roll to form a deposit thereon) is formed on the side of the touch roll. As the touch roll has a shorter period of time than that of the chill roll for which it is kept in contact with the melt, the bank formed on the side of the touch roll could not be fully cooled, therefore giving peel lumps and thereby causing surface failures. Accordingly, it is desirable that the roll running slower is the chill roll (second roll) and the roll running faster is the touch roll (first roll).

In the production method of the invention, the two rolls are preferably those having a large diameter. Concretely, the two rolls have a diameter of from 200 to 1500 mm, more preferably from 300 mm to 1000 mm, even more preferably from 350 mm to 800 mm, still more preferably from 350 mm to 600 mm, further more preferably from 350 to 500 mm. When rolls having such a large diameter are used, then the contact area between the film-like melt and the rolls may be large and the time for which a shear stress is given to the film-like melt is prolonged with the result that films having a large difference between Re[+40°] and Re[-40°] can be produced while reducing the fluctuation in Re[0°], Re[+40°] and Re[-40°] thereof. Also desirably, the deformation of the rolls can be reduced. In the production method of the invention, the two rolls may have the same or different diameter.

In the production method of the invention, the two rolls are driven each at a different peripheral speed. The two rolls may be driven dependently or independently, but preferably, they are driven independently for retarding the fluctuation in Re[0°], Re[+40°] and Re[-40°] of the films to be produced.

In the production method of the invention, preferably, the melt of thermoplastic resin composition fed from the feeding means is kept warmed just before it is brought into contact with at least any one of the two rolls to thereby reduce the temperature fluctuation in the width direction; concretely, the temperature fluctuation of the melt in the width direction is within 5°C. For reducing the temperature fluctuation, preferably, a shielding member having a heat-insulating function or a heat-reflecting function is disposed in at least a part of the air gap to thereby shield the melt from fresh air (see for example Fig. 8). When such a heat-insulting member is disposed in the pathway in the manner as above to thereby shield the melt from fresh air, then the melt is protected from being exposed to the external environments such as air, and therefore the temperature fluctuation in the film-like melt in the width direction thereof can be reduced. The temperature fluctuation in the film-like melt in the width direction is preferably within ± 3°C, more preferably within ± 1°C.

Further, when the shielding member is used, then the film-like melt may be led to pass between the rolls while its temperature is high, or that is, while its melt viscosity is low, and the member is therefore effective for facilitating the film production in the invention.

The temperature profile of the film-like melt may be determined, using a contact thermometer or a non-contact thermometer.

For example, the shielding member may be disposed, for example, on the inner side than both edges of the two rolls and as spaced from the side in the width direction of the thermoplastic resin composition feeding means (e.g., die). The shielding member may be fixed directly to the side of the feeding means, or may be fixed thereto as supported by a supporting member. The width of the shielding member is, for example, preferably the same as or longer than the width of the side of the feeding means in order to efficiently block the ascending air current to be generated by heat radiation by the feeding means.

The gap between the shielding member and the edge in the width direction of the film-like melt is preferably made narrow for efficiently blocking the ascending air current that runs along the roll surface, more preferably about 50 mm or so from the edge in the width direction of the film-like melt. Not always needed, the gap between the side surface of the feeding means and the shielding member is preferably such that the air current in the space surrounded by the shielding member could be discharged therethrough, for example, at most 10 mm.

As the material having a heat-insulating function and/or a heat-reflecting function, preferred is a baffle plate excellent in air shieldability and heat retentiveness, and for example, preferred is a stainless or the like metal plate.

For further reducing the fluctuation of Re[0°], Re[+40°] and Re[-40°], there may be employed a method of increasing the adhesiveness of the film-like melt to the casting roll. Concretely, the adhesiveness may be increased by combining an electrostatic method, an air knife method, an air chamber method, a vacuum nozzle method and the like. The adhesiveness increasing technique may be applied to the entire surface of the film-like melt or may be to a part thereof.

After thus formed, the film-like melt is preferably cooled, using at least one casting roll in addition to the two rolls between which the film is led to pass (e.g., casting roll and touch roll). The touch roll is generally so disposed that it can touch the first casting roll on the most upstream side (nearer to the thermoplastic resin composition feeding means, e.g., die). In general, three cooling rolls are used in a relatively popular method, which, however, is not limitative. The distance between the plural casting rolls is preferably from 0.3 mm to 300 mm as a face-to-face gap therebetween, more preferably from 1 mm to 100 mm, even more preferably from 3 mm to 30 mm.

Preferably, the processed film is trimmed on both sides thereof. The part trimmed away from the film may be recycled as a film-forming material. Also preferably, the film is knurled on one side or both sides thereof. The height of the knurl formed by the knurling treatment is preferably from 1 μm to 50 μm, more preferably from 3 μm to 20 μm. In the knurling treatment, a protrusion may be formed on one surface or both surfaces. The width of the knurl is preferably from 1 mm to 50 mm, more preferably from 3 mm to 30 mm. The knurling treatment may be carried out at room temperature to 300°C.

Also preferably, a laminate film is attached to one surface or both surfaces of the film before winding it. The thickness of the laminate film is preferably from 5 μm to 100 μm, more preferably from 10 μm to 50 μm. Not specifically defined, its material may be any of polyethylene, polyester, polypropylene, etc.

The tension for winding the film is preferably from 2 kg/m-width to 50 kg/m-width, more preferably from 5 kg/m-width to 30 kg/m-width.

The thickness of the unstretched film produced according to the production method of the invention is preferably at most 100 μm. For use in liquid crystal displays, the thickness of the film is more preferably at most 80 μm from the viewpoint of display body thickness reduction, even more preferably at most 60 μm, still more preferably at most 40 μm.

<Stretching, Relaxation>

After formed according to the above-mentioned method, the film may be stretched and/or relaxed. For example, the film may be processed according to the following process (a) to (g).

(a) Lateral stretching

(b) Lateral stretching → relaxation
(c) Longitudinal stretching
(d) Longitudinal stretching → relaxation
(e) Longitudinal (lateral) stretching → lateral (longitudinal) stretching
(f) Longitudinal (lateral) stretching → lateral (longitudinal) stretching → relaxation
(g) Lateral stretching → relaxation → longitudinal stretching → relaxation

Of those, especially preferred are the processes (a) to (d).

A tenter may be used for lateral stretching. Specifically, both sides in the width direction of the film are held with clips, and the film is expanded in the lateral direction. In this case, air at a predetermined temperature may be introduced into the tenter for controlling the stretching temperature. The stretching temperature is preferably from (Tg - 10)°C to (Tg + 60)°C, more preferably from (Tg - 5)°C to (Tg + 45)°C, even more preferably from (Tg - 10)°C to (Tg + 20)°C. Preferably, the lateral draw ratio is from 1.2 to 3.0 times, more preferably from 1.2 to 2.5 times, even more preferably from 1.2 to 2.0 times.

Before stretched, the film may be preheated, and after stretched, it may be thermally fixed, whereby the Re and/or Rth fluctuation in the stretched film may be reduced and the alignment angle fluctuation with bowing can be reduced. Any one of preheating and thermal fixation may be attained, but preferably, these are both attained. In preheating and thermal fixation, preferably, the film is held with clips, or that is, it is desirable that the preheating, the stretching and the thermal fixation of the film are attained continuously.

The preheating temperature may be higher by from 1°C to 50°C or so than the stretching temperature, and is preferably higher by from 2°C to 40°C, more preferably by from 3°C to 30°C. Preferably, the heating time is from 1 second to 10 minutes, more preferably from 5 seconds to 4 minutes, even more preferably from 10 seconds to 2 minutes. During the preheating, the tenter width is preferably kept nearly constant. The wording "nearly" is meant to indicate ± 10% of the width of the unstretched film.

The thermal fixation may be attained at a temperature lower by from 1°C to 50°C than the stretching temperature, more preferably lower by from 2°C to 40°C, even more preferably by from 3°C to 30°C. Still more preferably, the thermal fixation temperature is not higher than the stretching temperature and not higher than Tg. The time of the thermal fixation is preferably from 1 second to 10 minutes, more preferably from 5 seconds to 4 minutes, even more preferably from 10 seconds to 2 minutes. During the thermal fixation, the tenter width is preferably kept nearly constant. The wording "nearly" is meant to indicate a range of from 0% of the tenter width after the stretching treatment (the same width as the tenter width after the stretching treatment) to -10% thereof (smaller by 10% than the tenter width after the stretching treatment = width reduction). When the width of the film is expanded more than the stretched width, then it is unfavorable since residual strain may remain in the film.

The longitudinal stretching may be attained by leading the film to pass between two pairs of rolls under heat while the peripheral speed of the rolls on the outlet port side is made higher than that of the rolls on the inlet port side. In this stage, the retardation expressibility in the thickness direction of the film may be controlled by changing the distance between the rolls (L) and the width of the unstretched film (W). When L/W (referred to as an aspect ratio) is from 2 to 50 (long-spun stretching), films having a small Rth are easy to produce; and when L/W is from 0.01 to 0.3 (short spun), then films having a large Rth may be produced. Embodiments in this invention, any of long-spun stretching, short-spun stretching, stretching in the range between the two (middle stretching, L/W is from more than 0.3 to 2) may be employed; but preferred are long-spun stretching and short-spun stretching in which the alignment angle can be reduced. More preferably, the stretching modes are differentiated to the effect that short-spun stretching is employed for producing films having a high Rth, and long-spun stretching is employed for producing films having a low Rth.

The stretching temperature is preferably from (Tg - 10)°C to (Tg + 60)°C, more preferably from (Tg - 5)°C to (Tg + 45)°C, even more preferably from (Tg - 10) °C to (Tg + 20)°C. Also preferably, the longitudinal draw ratio is from 1.2 to 3.0 times, more preferably from 1. 2 to 2.5 times, even more preferably from 1.2 to 2.0 times.

After stretched, the film may be further processed for relaxation to enhance the dimensional stability thereof. After the film formation, the thermal relaxation may be attained after any of longitudinal stretching or lateral stretching, but preferably every after the two. The relaxation may be attained on-line continuously after stretching, but may be off-line after the stretched film is wound up.

Preferably, the thermal relaxation is attained at from (Tg - 30)°C to (Tg + 30)°C, more preferably from (Tg - 30) °C to (Tg + 20)°C, even more preferably from (Tg - 15)°C to (Tg + 10)°C, preferably for 1 seconds to 10 minutes, more preferably for 5 seconds to 4 minutes, even more preferably for 10 seconds to 2 minutes, while conveyed under tension of preferably from 0.1 kg/m to 20 kg/m, more preferably from 1 kg/m to 16 kg/m, even more preferably from 2 kg/m to 12 kg/m.

[Polarizer]

At least a polarizing element (hereinafter this may be referred to as "polarizing film") may be laminated on the film of the invention to produce a polarizer of the invention. The polarizer of the invention is described below. Examples of the polarizer of the invention include those produced for the purpose of two functions as a protective film and for viewing angle compensation on one surface of a polarizing film, and composite-type polarizers laminated on a protective film of TAC or the like.

The polarizer of the invention is not specifically defined in point of its constitution, and it may be any one comprising the film of the invention and a polarizing element. For example, the polarizer of the invention comprises a polarizing element and two polarizer-protective films (transparent polymer films) for protecting both surfaces of the element, the film of the invention may be at least one of the polarizer-protective films. The polarizer of the invention may have an adhesive layer via which the polarizer is stuck to any other member. In the polarizer of the invention, when the surface of the film of the invention has a roughened structure, it may have an antiglare function. Also preferably, the polarizer of the invention may comprise an antireflection film of the invention produced by laminating an antireflection layer (low-refractivity layer) on the surface of a film of the invention, or an optical compensatory film of the invention produced by laminating an optically-anisotropic layer on the surface of a film of the invention.

In general, a liquid crystal display device comprises a liquid crystal cell disposed between two polarizers, which, therefore has four polarizer-protective films. The film of the invention may be any of those four polarizer-protective films, but preferably, the film is especially advantageously used as the protective film to be disposed between the liquid crystal cell and the polarizing element in the liquid crystal display device.

More preferably, the polarizer of the invention has a constitution of a cellulose acylate film, a polarizing element and a film of the invention laminated in that order. Also preferred is a constitution of a cellulose acylate film, a polarizing element, a film of the invention and an adhesive layer laminated in that order.

(Optical Film)

As the optical film in the polarizer of the invention, used is the film of the invention. The film may be surface-treated. The surface treatment method includes, for example, corona discharge, glow discharge, UV irradiation, flame treatment, etc.

(Cellulose Acylate Film)

As the cellulose acylate film in the polarizer of the invention, used is any known cellulose acylate film for polarizer. For example, known triacetyl cellulose (TAC) films (e.g., FUJIFILM Corporation's Fujitac T-60) are preferred. The cellulose acylate film may be surface-treated. The surface treatment method includes, for example, saponification, etc.

(Polarizing Element)

As the polarizing element, for example, used is one produced by dipping a polyvinyl alcohol film in an iodine solution followed by stretching it.

Any one capable of attaining the intended object of the invention may be selected form the polarizing element for use in the invention. The polarizing element includes, for example, those produced by making a hydrophilic polymer film adsorb a dichroic substance such as iodine or dichroic dye followed by uniaxially stretching it; and polyene-based oriented films such as dehydrated polyvinyl alcohol films, dehydrochlorinated polyvinyl chloride films, etc. The hydrophilic polymer film includes, for example, polyvinyl alcohol films, partially formalized polyvinyl alcohol films, partially saponified ethylene/vinyl acetate copolymer films, etc. In the invention, preferred is a polarizing element produced by making a polyvinyl alcohol film adsorb iodine.

Preferably, the polarizing element further contains at least one of potassium and boron. Containing potassium and/or boron, the polarizing element may have a complex elastic modulus (Er) within a preferred range, and may have a high degree of polarization or may give a polarizer having a high degree of polarization. For producing the polarizing element containing at least one of potassium and boron, for example, the film to be the polarizing element may be dipped in at least one solution of potassium and boron. The solution may contain iodine.

For producing the polyvinyl alcohol film, any suitable working method is employable. The working method may be a known one. Commercial films may be directly used for the polyvinyl alcohol film. Commercial polyvinyl alcohol films include, for example, "Kuraray Vinylon Film" (KURARAY CO., LTD.'s trade name), "Tohcello Vinylon Film" (Tohcello Co. Ltd.'s trade name), "Nichigo Vinylon Film" (Nippon Gohsei's trade name), etc.

One example of producing a polarizing element is described. For example, a polyvinyl alcohol-based polymer

film (unprocessed film) is dipped in a swelling bath of pure water and in a dyeing bath of an aqueous iodine solution, in which the film is swollen and dyed under tension given thereto in the machine direction by rolls each running at a different speed. Next, the thus-swollen and dyed film is dipped in a crosslinking bath containing potassium iodine and is thus crosslinked and finally stretched under tension given thereto in the machine direction by rolls each running at a different speed. The crosslinked film is dipped in a water bath of pure water, as conveyed by rolls, and is thus rinsed with water. The rinsed film is then dried to have a controlled water content and wound up. In that manner, the polarizing element is produced by stretching the starting film, for example, by from 5 times to 7 times the original length thereof.

The polarizing element may be processed for surface modification in any desired manner, for enhancing its compatibility with adhesive. The surface modification treatment includes, for example, corona discharge, plasma discharge, glow discharge, flame treatment, ozone treatment, UV ozone treatment, UV treatment, etc. One or more of these treatments may be applied to the polarizing element either singly or as combined.

(Adhesive Layer)

The polarizer of the invention may have an adhesive layer as at least one outermost layer thereof (the polarizer of the type may be referred to as "adhesive polarizer"). In one preferred embodiment, an adhesive layer is provided on the surface of the optical film opposite to the surface thereof stuck to the above-mentioned polarizing element, which is for facilitating adhesion of the polarizer to any other member such as any other optical film, liquid crystal cell, etc.

(Production Method for Polarizer)

A method for producing the polarizer of the invention is described.

The polarizer of the invention may be produced by sticking one surface (with surface treatment, if any) of a film of the invention to at least one surface of the above-mentioned polarizing element with an adhesive. In case where a cellulose acylate film, a polarizing element of the invention and a film of the invention are stuck together in that order to produce a polarizer of the invention, an adhesive may be applied to both surfaces of the polarizing element and the polarizing element may be stuck to the other films.

In the production method for the polarizer of the invention, preferably, the film of the invention is directly stuck to the polarizing element.

As the adhesive, any known adhesive for polarizer production may be used. The embodiment is also preferred where an adhesive layer is provided between the polarizing element and the film adjacent thereto. Examples of the adhesive include aqueous solution of polyvinyl alcohol or polyvinyl acetal (e.g. polyvinyl butyral), and latex of vinylic polymer (e.g., polybutyl acrylate). An aqueous solution of completely saponified polyvinyl alcohol is especially preferred for the adhesive. Preferably, the polyvinyl alcohol adhesive contains a polyvinyl alcohol resin and a crosslinking agent.

The production method for the polarizer of the invention is not limited to the above-mentioned methods, and any other methods are employable. For example, herein employable are the methods described in JP-A 2000-171635, 2003-215563, 2004-70296, 2005-189437, 2006-199788, 2006-215463, 2006-227090, 2006-243216, 2006-243681, 2006-259313, 2006-276574, 2006-316181, 2007-10756, 2007-128025, 2007-140092, 2007-171943, 2007-197703, 2007-316366, 2007-334307, 2008-20891. Of those, more preferred are the methods described in JP-A 2007-316366, 2008-20891.

Preferably, a protective film is stuck to the other surface of the polarizing film, and the protective film may be a film of the invention. Also usable are various films heretofore known as protective films for polarizers, such as cellulose acylate films, cyclic polyolefin polymer films, etc.

Thus produced, the polarizer of the invention is preferably used in a liquid crystal display device, in which the polarizer may be on any side of the viewing side or the backlight side of the liquid crystal cell, or may be on both sides thereof with no limitation. Specific examples of image-display devices to which the polarizer of the invention is applicable include self-emitting display devices such as electroluminescent (EL) displays, plasma displays (PD), field emission displays (FED). The liquid crystal display device to which the polarizer is applicable includes transmission-type liquid crystal display devices and reflection-type liquid crystal display devices.

[Liquid Crystal Display Device]

The film and the polarizer of the invention may be used in liquid crystal display devices with various display modes. The film and the polarizer of the invention is preferably used with the liquid crystal display mode of TN(Twisted Nematic), OCB(Optical compensatory Bend) and ECB(Electrically Controlled Birefringence), and among them, the film and the polarizer of the invention is more preferably used with that of TN and ECB mode.

[Optical compensatory Film]

Preferably, the film of the invention is used as an optical film. Its preferred embodiment is an optical compensatory film.

<Laminate Film>

Preferably, the film of the invention is a single-layer film from the viewpoint of the ability to omit a step of film lamination and of the ability to inhibit light reflection on the laminate interface; however, a functional layer may be laminated on the film of the invention to give a laminate film. In case where the film of the invention is a laminate film comprising 2 or more layers, it is desirable that all the layers do not contain a polymerizing liquid crystal compound from the viewpoint of reducing the polarization index of the film.

An optically-anisotropic layer may be laminated on the film of the invention to give a laminate film. The optically-anisotropic layer usable in the invention is not specifically defined. For example, herein usable are those described in JP-A 2001-328973, [0008] to [0034], JP-A 2006-227630 [0017], JP-A 2007-248780, [0014] to [0097].

[Antireflection Film]

An antireflection layer may be given to the film of the invention to produce an antireflection film of the invention. In general, the antireflection layer may be formed by providing a low refractivity layer serving also as an antifouling layer, and at least one other layer having a higher refractive index than that of the low refractivity layer (high refractivity layer, middle refractivity layer) on a (transparent) support. The antireflection layer usable in the invention is not specifically defined. For example, herein usable are those described in JP-A 2007-65635, [0011] to [0150], JP-A 2008-262187, [0015] to [0028] and [0073] to [0207], JP-A 2008-268939, [0009] to [0201].

EXAMPLES

The invention is described more concretely with reference to the following Examples, in which the material, the reagent and the substance used, their amount and ratio, and the details of the treatment may be suitably modified or changed not overstepping the sprit and the scope of the invention. Accordingly, the invention should not be limited to the Examples mentioned below.

[Production Example 1] Production of Cyclic Olefin Copolymer Pellets:

Pellets of "TOPAS #6013" by Polyplastics were used as a cyclic olefin copolymer. "TOPAS #6013" has a positive intrinsic birefringence. The glass transition point of the resin is 136°C.

[Production Example 2] Production of Cellulose Acylate Pellets:

Cellulose acetate propionate (CAP) was produced according to the method described in Example 1 of JP-A 2006-348123, and this was pelletized in an ordinary manner. Regarding its composition, CAP has a degree of acetylation of 0. 15, a degree of propionylation of 2. 60, a total degree of acyl substitution of 2.75, a number-average degree of polymerization DPn = 118, and a positive intrinsic birefringence. The glass transition point of the resin is 137°C.

[Production Example 3] Production of Polycarbonate Pellets:

Pellets of Idemitsu's "Toughlon MD1500" were used as a polycarbonate. "Toughlon MD1500" has a positive intrinsic birefringence. The glass transition point of the resin is 142°C.

[Production Example 4] Production of Acrylic Resin Pellets:

Styrene/acrylic copolymer pellets Asahi Kasei Chemicals' "Delpet 980N" were used as an acrylic resin. "Delpet 980N" has a negative intrinsic birefringence. The glass transition point of the resin is 123°C.

[Example 1]

(Film Production)

Cyclic olefin copolymer pellets of TOPAS #6013 were dried at 100°C for at least 2 hours, then melted at 260°C, and kneaded and extruded using a single-screw kneading extruder. A screen filter, a gear pump and a leaf disc filter were disposed in that order between the extruder and a die, and these were connected to each other via a melt pipe. The resin melt was extruded out at the extrusion temperature (melt temperature) shown in Table 1, through the die having a width of 450 mm and a lip gap of 1 mm.

Then, the resin melt was led through extrusion into the center part nip-pressed by a casting roll and a chill roll (see Fig. 7). In this process, the cylinder was so controlled that the HCr-plated metallic touch roll having a width of 200 mm and a diameter of 350 mm could be kept in contact with the HCr-plated metallic casting roll (chill roll) having a width of 1800 mm and a diameter of 400 mm on the most upstream side under the controlled touch pressure shown in Table 1 below. The touch pressure was measured by putting a prescale (by FUJIFILM Corporation) between the two rolls under no melt, and the found value was taken as the pressure to be given to the melt in film formation. In pressure measurement, the roll temperature was 25°C and the roll speed was 5 m/min for both rolls. The touch roll and the chill roll had the Shore hardness shown in Table 1 below. Using these rolls, the touch roll peripheral speed, the chill roll peripheral speed and the peripheral speed ratio were varied as in Table 1, and under the condition, films were produced.

The temperature of the touch roll and the chill roll was (Tg - 5)°C; and the distance between the die and the melt landing point was 200 mm. The atmosphere in film formation was at 25°C and 60% RH.

Next, just before winding, the film was trimmed on both sides (each 5 cm of the overall width), and knurled on both sides to a width of 10 mm and a height of 20 μm. Having a width of 200 mm, the formed film was wound up at a machine speed of 5 m/min (chill roll speed) to a length of 450 m. Thus formed, the film had a thickness of 100 μm, and this is a film of Example 1.

(Retardation of Film)

The film of Example 1 thus produced was randomly sampled at 10 points in the center part thereof, as spaced by at least 2 mm from each other. Using KOBRA, the retardations Re[+40°] and Re[-40°] of each sample, as tilted by +40° and -40° from the normal line of the film to the film tilt direction, were measured, and the data were averaged. The average value thus computed is shown in Table 1. Similarly, using a Muller matrix polarimeter, CRe of the film, as tilted by +40° and -40° from the normal line of the film to the perpendicular direction to the film tilt direction, was measured and the result was shown in Fig.2 below, and also CRe[+40°] was shown in Table 1. The tilt direction of the film in Example 1 was in the machine direction of the film.

(Polarization index of Film)

The film of Example 1 thus produced was sampled in a size of 10 cm × 10 cm, and the sample film was sandwiched between polarizers in such a manner that the in-plane slow axis thereof could be in parallel to the absorption axis of the polarizers, and irradiated with light in the direction perpendicular to the surface of the polarizer. The brightness in the crossed Nicols configuration of the polarizers, and the brightness in parallel Nicols configuration thereof were measured, and from the found data, the polarization index of the film was computed according to the following formula:

Polarization index
= 2 × (brightness under crossed Nicols)/(brightness under parallel Nicols).

The result is shown in Table 1 below.

(Residual Solvent Amount in Film)

300 mg of the film of Example 1 thus produced was dissolved in 30 ml of a solvent. (The solvent is not specifically defined, and may be any one capable of dissolving the film. In this Example, dichloromethane was used for CAP, styrene/acryl copolymer and PC; and n-hexane was used for cyclic olefin polymer.) The film solution was analyzed through gas

chromatography (GP) under the condition mentioned below.
Column: DB-WAX (0.25 mmφ × 30 m, film thickness 0.25 μm).
Column temperature: 50°C.
Carrier gas: nitrogen.
Time for analysis: 15 minutes.
Sample amount: 1 μl.

Based on the calibration curve previously prepared, the residual solvent amount in the film of Example 1 was determined. The result is shown in Table 1 below.

(Surface Roughness of Film)

The surface roughness Ra of the film of Example 1 thus produced was measured according to the method mentioned below. The result is shown in Table 1.

The film was sampled in a size of 10 cm × 10 cm, and its Ra was measured with a laser interference meter F601 (by FUJINON Corporation).

(Extinction Position of Film)

Sliced sections of Example 1 were checked for the extinction angle thereof by rotating them at intervals of 1° within a range of from 0° to 90°, using a polarization microscope (Nikon's Eclipse E600POL). The polarization microscope picture thus taken was sequentially divided into 20 divisions from one surface of the film to the other surface of the film in the film thickness direction. Fig. 3 shows the relationship between the distance in the film thickness direction from the surface of the film of Example 1 that had been kept in contact with the first nip-pressing surface (touch roll) on which the film moving speed was faster (the lower surface side of the film in Fig. 4) and the extinction angle of the film. Fig. 3 confirms that the film of the invention has a special inner structure in which the extinction angle of the film varies in the thickness direction thereof. Fig. 3 also confirms that, in the film of the invention, the extinction angle greatly changes at a distance of from 60 to 80 μm from the lower surface side of the film in Fig. 4.

The film of Example 1, as sandwiched between two polarizers, was further checked for the extinction position thereof by rotating the two polarizers by 10°, and by 60°, 70° and 80°, using a polarization microscope (Nikon's Eclipse E600POL). The photographic pictures are in Fig. 4, (A) to (D). These confirm the following: In (A) where the two polarizers were rotated by 10°, the light extinction was at the part of about 80 μm from the lower surface side of the film; but in the other area, no light extinction was found. On the other hand, in (B) where the two polarizers were rotated by 60°, the light extinction was at the part of about 5 μm from the lower surface side of the film; but in the other area, no light extinction was found. In (C) where the two polarizers were rotated by 70°, the light extinction was at the part of about 35 μm, and in (D) where the two polarizers were rotated by 80°, the light extinction was at the part of about 70 μm; but in those two, no light extinction was found in the other area.

The above confirms that, in the film of Example 1, when analyzed sequentially from the lower surface side of the sliced section of the film toward the upper surface side thereof, the first detected extinction angle differs from the last detected extinction angle by over 3°. In addition, the degree of birefringence of the film was determined as compared with the data in an interference color chart, and as a result, it has been found that, differing from conventional films formed by coating (the birefringence of a conventional film formed by coating does not change but is constant in the thickness direction thereof), the film has a part having a largest birefringence inside the film.

[Examples 2 to 21, Comparative Examples 1 to 8]

Optical films of Examples and Comparative Examples were produced in the same manner as in Example 1, for which, however, the resin used and the condition in film formation were changed as in Table 1 below. The optical properties of the optical films of Examples and Comparative Examples are shown in Table 1. The Shore hardness of the rubber roll used in Comparative Example 4 could not be measured according to the method of JIS Z2246, and was lower than 20 HS.

The films of Examples 2 to 21 were analyzed for the extinction angle and the birefringence profile in the film thickness direction thereof in the same manner as in Example 1. The data confirm that, when the sliced sections were analyzed sequentially from the lower surface side toward the upper surface side thereof, the first detected extinction angle differed from the last detected extinction angle by over 3°. On the other hand, when the films of Comparative Examples 1 and 2 were analyzed sequentially from the lower surface side of the sliced section toward the upper surface side thereof, the first detected extinction angle did not differ from the last detected extinction angle by over 3°. The tilt direction of the films of Examples and Comparative Examples was all in the machine direction of the films. The in-plane slow axis of the films was in the cross direction thereof in Examples 20 and 21 and Comparative Example 7; while in

the others, it was in the machine direction of the films.

| Table 1 | Resin | Cylinder Parameter Values (KN) | Touch Pressure (MPa) | Shore Hardness (HS) | Touch Roll peripheral Speed (m/min) | Chill Roll peripheral Speed (m/min) | Peripheral Speed Ratio | Melt temperature (°C) | Re [0°] (nm) | Re [40°] (nm) | Re [-40°] (nm) | \|Re [40°]-Re [-40°]\| (nm) | Rth (nm) | Cre [+40°] (nm) | Polarization index (×10⁻⁴) | Residual Solvent Amount (%) | Ra (nm) | Thickness (μm) | Maximum Extinction Position (°) | Minimum Extinction Position (°) | Maximum Extinction Position | Maximum Birefringence Position |
|---|---|---|---|---|---|---|---|---|---|---|---|---|---|---|---|---|---|---|---|---|---|---|
| Example 1 | cyclic olefin | 3 | 20 | 45 | 5.3 | 5.0 | 0.94 | 260 | 123 | 184 | 27 | 157 | 158 | 27 | 1.40 | 0.00 | 28 | 100 | 80 | 2 | inside | inside |
| Example 2 | cyclic olefin | 3 | 20 | 45 | 5.3 | 5.0 | 0.94 | 260 | 280 | 292 | 178 | 114 | 255 | 22 | 1.00 | 0.00 | 26 | 200 | 85 | 1 | inside | inside |
| Example 3 | cyclic olefin | 6 | 40 | 60 | 5.3 | 5.0 | 0.94 | 260 | 158 | 246 | 26 | 220 | 216 | 33 | 1.20 | 0.00 | 22 | 100 | 79 | 1 | inside | inside |
| Example 4 | cyclic olefin | 12 | 60 | 65 | 5.3 | 5.0 | 0.94 | 260 | 197 | 298 | 33 | 265 | 279 | 40 | 0.97 | 0.00 | 16 | 100 | 80 | 1 | inside | inside |
| Example 5 | cyclic olefin | 14 | 75 | 72 | 5.3 | 5.0 | 0.94 | 260 | 241 | 353 | 69 | 283 | 290 | 48 | 0.55 | 0.00 | 15 | 100 | 78 | 2 | inside | inside |
| Example 6 | cyclic olefin | 3 | 20 | 65 | 5.6 | 5.0 | 0.89 | 260 | 175 | 299 | 3 | 296 | 276 | 6 | 0.61 | 0.00 | 25 | 100 | 88 | 56 | inside | inside |
| Example 7 | cyclic olefin | 3 | 20 | 65 | 5.1 | 5.0 | 0.98 | 260 | 86 | 108 | 34 | 74 | 99 | 42 | 0.52 | 0.00 | 24 | 100 | 82 | 0 | inside | inside |
| Example 8 | cyclic olefin | 3 | 20 | 65 | 5.0 | 5.3 | 0.94 | 260 | 152 | 43 | 240 | 197 | 161 | 35 | 0.58 | 0.00 | 25 | 100 | 79 | 1 | inside | inside |
| Example 9 | cyclic olefin | 6 | 40 | 65 | 8.0 | 7.5 | 0.94 | 260 | 86 | 108 | 34 | 74 | 99 | 12 | 0.55 | 0.00 | 25 | 80 | 82 | 2 | inside | inside |
| Example 10 | cyclic olefin | 12 | 60 | 65 | 13.0 | 12.2 | 0.94 | 260 | 118 | 153 | 50 | 103 | 121 | 27 | 0.54 | 0.00 | 20 | 60 | 84 | 1 | inside | inside |
| Example 11 | cyclic olefin | 25 | 130 | 72 | 26.0 | 24.0 | 0.92 | 260 | 60 | 78 | 21 | 57 | 68 | 6 | 0.25 | 0.00 | 15 | 40 | 84 | 61 | inside | inside |
| Example 12 | cyclic olefin | 60 | 250 | 80 | 26.0 | 24.0 | 0.92 | 260 | 94 | 129 | 37 | 92 | 94 | 8 | 0.25 | 0.00 | 15 | 40 | 80 | 59 | inside | inside |
| Example 13 | cyclic olefin | 80 | 400 | 90 | 26.0 | 24.0 | 0.92 | 260 | 111 | 150 | 44 | 106 | 113 | 10 | 0.40 | 0.00 | 16 | 40 | 81 | 58 | inside | inside |
| Example 14 | cyclic olefin | 3 | 20 | 30 | 5.3 | 5.0 | 0.94 | 260 | 112 | 162 | 34 | 128 | 127 | 23 | 1.70 | 0.00 | 25 | 100 | 81 | 1 | inside | inside |
| Example 15 | CAP | 6 | 45 | 65 | 8.0 | 5.0 | 0.63 | 235 | 63 | 85 | 10 | 75 | 100 | 15 | 1.60 | 0.00 | 16 | 80 | 88 | 1 | inside | inside |
| Example 16 | CAP | 6 | 45 | 65 | 5.1 | 5.0 | 0.98 | 235 | 32 | 33 | 13 | 20 | 47 | 5 | 1.70 | 0.00 | 17 | 80 | 82 | 70 | inside | inside |
| Example 17 | PC | 14 | 75 | 65 | 21.0 | 20.0 | 0.95 | 270 | 121 | 195 | 27 | 168 | 149 | 28 | 1.02 | 0.00 | 18 | 40 | 80 | 0 | inside | inside |
| Example 18 | PC | 6 | 45 | 65 | 24.0 | 20.0 | 0.83 | 270 | 169 | 298 | 33 | 265 | 202 | 18 | 0.98 | 0.00 | 20 | 40 | 81 | 1 | inside | inside |
| Example 19 | PC | 6 | 45 | 65 | 5.3 | 5.0 | 0.94 | 270 | 287 | 408 | 108 | 299 | 297 | 63 | 1.06 | 0.00 | 17 | 100 | 81 | 0 | inside | inside |
| Example 20 | styrene/acrylic | 6 | 45 | 65 | 6.5 | 5.0 | 0.77 | 250 | 61 | 10 | 107 | 97 | -73 | 15 | 0.18 | 0.00 | 19 | 100 | 82 | 1 | inside | inside |
| Example 21 | styrene/acrylic | 6 | 45 | 65 | 5.1 | 5.0 | 0.98 | 250 | 21 | 14 | 22 | 8 | -17 | 7 | 0.20 | 0.00 | 19 | 100 | 82 | 1 | inside | inside |
| Comparative Example 1 | cyclic olefin | 1 | 5 | 40 | 5.3 | 5.0 | 0.94 | 260 | 0 | 2 | 1 | 1 | 8 | 0 | 1.32 | 0.00 | 22 | 100 | 86 | 83 | inside | inside |
| Comparative Example 2 | cyclic olefin | 3 | 15 | 45 | 5.3 | 5.0 | 0.94 | 260 | 41 | 49 | 22 | 27 | 37 | 1 | 1.22 | 0.00 | 18 | 100 | 76 | 73 | inside | inside |
| Comparative Example 3 | cyclic olefin | 100 | 520 | 75 | 5.3 | 5.0 | 0.94 | 260 | Film formation impossible as touch and cast rolls deformed. | | | | | | | | | | | | | |
| Comparative Example 4 | cyclic olefin | 10 | 1 | rubber roll | 5.3 | 5.0 | 0.94 | 260 | Film formation impossible as rubber roll deformed. | | | | | | | | | | | | | |
| Comparative Example 5 | CAP | 1 | 5 | 45 | 5.2 | 5.0 | 0.96 | 235 | 0 | 5 | 1 | 4 | 13 | 0 | 0.89 | 0.00 | 16 | 80 | 82 | 80 | inside | inside |
| Comparative Example 6 | PC | 1 | 5 | 45 | 5.1 | 5.0 | 0.98 | 270 | 26 | -69 | 135 | 225 | 210 | 4 | 0.77 | 0.00 | 21 | 100 | 50 | 47 | inside | inside |
| Comparative Example 7 | styrene/acrylic | 1 | 5 | 45 | 5.2 | 5.0 | 0.96 | 250 | 1 | 5 | -6 | 11 | 14 | 0 | 0.56 | 0.00 | 18 | 100 | 63 | 62 | inside | inside |
| Comparative Example 8 | cyclic olefin | 12 | 60 | 65 | 5.0 | 5.0 | 1.00 | 260 | 164 | 140 | 140 | 0 | no tilt direction | | | | | 100 | no tilt direction | | | |

Table 1 confirms the formation of a good tilt structure in all of Examples 1 to 21. In addition, the films of Examples 1 to 21 all had a thickness of at most 200 μm and had a circular retardance of more than 5 nm (Fig. 2), in which the residual solvent amount was substantially 0, and the films had a small surface roughness Ra.

On the other hand, in Comparative Examples 1 and 2, the touch pressure was lower than the lowermost limit in the production method of the invention, and |Re[+40°]-Re[-40°] of the obtained films was poor, and the films were unsatisfactory as retardation films. Fig. 3 shows the relationship between the distance in the film thickness direction from the surface of the film of Comparative Example 1 that had been kept in contact with the first nip-pressing surface (touch roll) on which the film moving speed was faster (the lower surface side of the film in Fig. 4) and the extinction angle of the film. The film of Comparative Example 1, as sandwiched between two polarizers, was further checked for the extinction position thereof by rotating the two polarizers by 10°, and by 60°, 70° and 80°, using a polarization microscope (Nikon's Eclipse E600POL). The photographic pictures are in Fig. 4, (a) to (d). In Fig. 3 and Fig. 4, the film of Comparative Example 1 is compared with that of Example 1. As read on Fig. 3, the extinction angle was within a range of from 83 to 86° in the film of Comparative Example 1; and when the sliced sections were analyzed sequentially from the lower surface side to the upper surface side thereof, the first detected extinction angle did not differ from the last detected extinction angle by over 3°. This means that the film of Comparative Example 1 has a nearly monotonic tilt structure.

In addition, the films of Examples 1 to 7 and 19 had a maximum extinction angle detected in the 5th to 15th divisions of the 20 divisions cut in the thickness direction. Further, the films of Examples 1 to 7 and 19 had a maximum birefringence angle detected in the 5th to 15th divisions of the 20 divisions divided in the thickness direction. The films of the other Examples had a maximum extinction angle and a maximum birefringence detected in the 3rd to 18th divisions of the 20 divisions divided in the thickness direction.

In Comparative Example 3, the touch pressure was higher than the uppermost limit in the production method of the invention, and the touch roll and the casting roll (chill roll) deformed therefore resulting in film production failure. In Comparative Example 4, a rubber roll was used as the touch roll and the cylinder pressure was 10 KN; in this, however, the touch pressure increased only up to 1 MPa and the rubber roll deformed, therefore resulting in film production failure. In Comparative Examples 5 to 7, the type of the resin used was changed and the touch pressure was lower than the lowermost limit in the production method of the invention; and in these, |Re[+40°]-Re[-40°]| or Re[0°] of the obtained films was unsatisfactory for retardation films. Further, the circular retardance of the films of Comparative Examples 1 to 7 was all substantially 0 nm (Fig. 2).

The reason why the films of Examples greatly differ from the films of Comparative Examples in point of the inner structure thereof may result from the touch pressure. Specifically, in Examples, the touch pressure was high and therefore banks were positively formed between the rolls, and taking advantage of the flow orientation of the banks, the films produced could have a retardation. As a result, the films of Examples have a special inner structure caused by the flow rate of the banks. On the other hand, in Comparative Examples, the touch pressure was low and therefore few banks were formed in film production; but in these, only simple shear deformation caused by the peripheral speed difference between the rolls was given to the resin, and therefore the retardation films produced could have a nearly monotonic tilt structure.

In Comparative Example 8, the peripheral speed ratio was more than the uppermost limit in the production method of the invention, and therefore the formation of films with no tilt direction was confirmed.

In the same manner as in Example 1 but changing the temperature of the touch roll and the chill roll to (Tg + 15) °C higher than the uppermost limit of the preferred range in the invention, films having a special inner structure were produced, which, however, caused peel lumps therefore having surface failures. Also in the same manner as in Example 1 but changing the temperature of the touch roll and the chill roll to (Tg - 75)°C lower than the lowermost limit of the preferred range in the invention, films having a special inner structure were produced, which, however, caused lateral lumps. Also in the same manner as in Example 1 but changing the peripheral speed ratio to 0.56 lower than the lowermost limit of the preferred range in the invention, films having a special inner structure were produced, which, however, had scratches on the entire surfaces thereof therefore causing surface failures, and in addition, the surfaces of the metal rolls were also scratched. Also in the same manner as in Example 1 but changing the Shore hardness of the rolls to 25HS lower than the lowermost limit of the preferred range in the invention, films having a special inner structure were produced; however, the rolls were dented during film formation therefore confirming the impossibility of continuous film production.

[Comparative Example 9]

A tilt orientation film was produced according to the method described in JP-A 6-222213, and this was a film of Comparative Example 9. The thickness of the film of Comparative Example 9 was 100 μm.

In the film of Comparative Example 9, Re[0°] fluctuation was extremely great and the film had remarkable lateral lumps. The film of Comparative Example 9 was significantly inferior to the film of Example 1 in point of the uniformity.

The film of Comparative Example 9, as sandwiched between two polarizers, was checked for the extinction position thereof by rotating the two polarizers by 10°, and by 60°, 70° and 80°, using a polarization microscope (Nikon's Eclipse E600POL). The photographic pictures are in Fig. 5, (A) to (D). On Fig. 5, the specific difference between the film of Comparative Example 9 and the film of Example 1 is described. As read on Fig. 5, the extinction angle of the film of Comparative Example 9 was at about 60°; and when the sliced sections were analyzed sequentially from the lower surface side to the upper surface side thereof, the difference between the first detected extinction angle and the last detected was small. This means that the film of Comparative Example 9 had a nearly monotonic tilt structure.

As in the above, it is understood that the inner structure of the film of the invention quite differs from that of films produced in a conventional method.

The above confirms that, according to the production method of the invention where the touch pressure is controlled to fall within the range defined in the invention and where a peripheral speed difference is given to the two rolls, a films having a good tilt structure and having a special inner structure can be produced.

As in Examples 1 to 21, the films of the invention all have a special inner structure; hereinafter it is shown that these are also especially favorable for optical compensatory films.

(Production of Polarizer, [Comparative Example 10])

Using the film of Example 1 and the film of Comparative Example 1 produced in the above, polarizers were constructed. Concretely, iodine was adsorbed by a stretched polyvinyl alcohol film to give a polarizing film. Using the polarizing film, a 80-μm TAC film (by FUJIFILM Corporation), a λ/2 plate of a uniaxially-stretched norbornene polymer film with Re = 270 nm, and the film of Example 1 or Comparative Example 1 were stuck together in such a manner that the chill roll surface of the film of Example 1 or Comparative Example 1 could face the λ/2 plate, as in the configuration shown in Fig. 1. In that manner, two polarizers PL1 with the film of Example 1, and two polarizers PL2 with the film of Comparative Example 1 were constructed. In addition, according to the method of Example 1 in JP-A 2002-311426, a liquid crystal-coated film was produced as Comparative Example 10. In place of the film of Example 1, the film of Comparative Example 10 was used to construct two polarizers PL3 in the same manner as above.

(Production and Evaluation of Semitransmission-type ECB-mode Liquid crystal Display Device)

Next, using the above polarizer, an ECB-mode semitransmission-type liquid crystal display device was constructed. The liquid crystal cell used herein has ZL1-1695 (by Merck) as the liquid crystal material; the liquid crystal layer had a thickness of 2.4 μm in the reflection electrode region (reflection display part) and a thickness of 4.9 μm in the transmission electrode region (transmission display part). the pretilt angle in the two boundaries of the substrate facing the liquid crystal layer was 2 degrees; Δnd of the liquid crystal cell was about 150 nm in the reflection display part and was about 320 nm in the transmission display part.

Above and below the liquid crystal cell, the two polarizers produced in the above were disposed as in the configuration shown in Fig. 1. The arrow in the polarizers indicates the absorption axis; the arrow in the retardation film indicates the slow axis; the arrow in the ECB cell indicates the rubbing direction given to the surface thereof facing to the adjacent member. In this, the 12:00 direction is 0°, and the clockwise direction is "+".

The liquid crystal display device LCD1 of an example of the invention was analyzed for the viewing angle capable of giving a contrast ratio of at least 10 at the time of white/black display; and the sum total of the vertical and horizontal viewing angles of LCD1 was 280°. The front CR of LCD1 was 250. On the other hand, the sum total of the vertical and horizontal viewing angles, capable of giving a contrast ratio of at least 10, of LCD2 where the film of Comparative Example 1 was used was 100°, and the front CR of LCD2 was at most 100. The sum total of the vertical and horizontal viewing angles of LCD3 where the film of Comparative Example 10 was used was 280°, but the front CR of LCD3 was 180 and was low. The polarization index of the film of Comparative Example 10 was measured, and was $8.53 \times 10^{-4}$, which was higher by about 10 times than that of the film of Example 1.

As in the above, it is understood that, when the film of the invention is incorporated in a liquid crystal display device, it realizes sufficient viewing angel compensation and increases the front CR of the device.

(Antireflection Film for Liquid crystal Display)

Using the optical film of Example 1, an antireflection film was produced according to Example 47 in Hatsumei Kyokai Disclosure Bulletin No. 2001-1745. Incorporated in a liquid crystal display device, the film exhibited an excellent antireflection function.

(Antireflection Film for Organic EL)

According to JP-A 9-127885, the optical film of Example 1 was stuck to a linear polarizer in such a manner that the slow axis and the absorption axis could cross at 45 degrees, to produce an antireflection film. The antireflection film was incorporated into an organic EL display device, and its antireflection function was confirmed. Further, from the characteristic feature of the film of the invention, it was confirmed that the device could have an asymmetric viewing angle characteristic.

The present disclosure relates to the subject matter contained in Japanese Patent Application No. 201288/2008 filed on August 4, 2008 and in Japanese Patent Application No. 115420/2009 filed on May 12, 2009, which is expressly incorporated herein by reference in its entirety.

The foregoing description of preferred embodiments of the invention has been presented for purposes of illustration and description, and is not intended to be exhaustive or to limit the invention to the precise form disclosed. The description was selected to best explain the principles of the invention and their practical application to enable others skilled in the art to best utilize the invention in various embodiments and various modifications as are suited to the particular use contemplated. It is intended that the scope of the invention not be limited by the specification, but be defined claims set forth below.

## Claims

1. A method for producing an optical film comprising
passing a melt of a composition containing a thermoplastic resin between a first and a second nip-pressing surface of a nip-pressing unit whereby the melt is continuously nip-pressed therebetween to form a film, wherein

   - the nip-pressing unit applies a pressure of 20-500 MPa to the melt, and
   - the first nip-pressing surface moves at a higher speed than the second nip-pressing surface.

2. The method of Claim 1, further comprising melt-extruding the composition containing a thermoplastic resin through a die before passing it between the first and the second nip-pressing surface.

3. The method of Claim 1 or 2, wherein the ratio $R_{2nd}/R_{1st}$ of the moving speed of the second nip-pressing surface $R_{2nd}$ and the moving speed of the first nip-pressing surface $R_{1st}$ is in the range of 0.60-0.99.

4. The method of any of Claims 1-3, wherein the temperature of the first and second nip-pressing surfaces are controlled to be from (Tg-70°C) to (Tg+10°C), with Tg being the glass transition temperature of the thermoplastic resin.

5. The method of any of Claims 1-4, wherein

   - the nip-pressing unit contains two rolls running at a different peripheral speed, and
   - preferably the two rolls both have a Shore hardness of at least 45 HS, and
   - more preferably the two rolls are both metal rolls.

6. The method of any of Claims 1-5, wherein the thermoplastic resin is at least one selected from cyclic olefin resins, cellulose acylate resins, polycarbonate resins, styrene resins and acrylic resins.

7. An optical film having a thickness of at most 200 μm, which is obtainable by the method of any of Claims 1-6.

8. An optical film comprising a thermoplastic resin and having a tilt direction, which is such that, when a sliced section of the film having both a tilt direction and a thickness direction in the sliced plane thereof is placed between two polarizers set in the crossed Nicols configuration, and the two crossed Nicols polarizers are rotated within a range of 0-90° while irradiated with light in the direction perpendicular to the polarizer plane, and when the sliced section of the film is analyzed sequentially from one end to the other end in the thickness direction thereof, then a first detected extinction angle differs from a last detected extinction angle by over 3°.

9. The optical film of Claim 8, wherein the extinction angle changes in a part of the sliced section of which the birefringence is not substantially 0.

10. The optical film of Claim 8 or 9, which has a part having a maximum birefringence inside the film when the sliced

section of the film is analyzed sequentially from one end to the other end in the thickness direction thereof.

**11.** The optical film of any of Claims 8-10, wherein

(i) the retardation Re[0°], measured in the normal direction of the film plane at a wavelength of 550 nm, is in the range of 20-300 nm; and
(ii) the difference |Re[+40°]-Re [-40°]| between the retardation Re[+40°] measured in the direction tilted by 40° from the normal line of the film plane to the tilt direction, and the retardation Re[-40°] measured in the direction tilted by -40° from the normal line of the film plane to the tilt direction, is in the range of 5-300 nm.

**12.** An optical film comprising a thermoplastic resin and having a tilt direction, wherein

(i) Re[0°] is in the range of 60-300 nm; and
(ii) |Re[+40°]-Re [-40°]| is in the range of 40-300 nm.

**13.** The optical film of any of Claims 8-12, wherein

(iii) the retardation Rth in the thickness direction of the film, expressed as $Rth = \{(nx+ny)/2-nz)\} \times d$ (wherein nx, ny and nz are the refractive indices in the main axial directions of an index ellipsoid; and d is the film thickness), is in the range of 40-500 nm.

**14.** The optical film of any of Claims 11-13, wherein

(i) Re[0°] is in the range of 60-200 nm;
(ii) |Re[+40°]-Re [-40°]| is in the range of 60-250 nm, and
(iii) Rth is in the range of 40-350 nm.

**15.** The optical film of any of Claims 7-14, which does not substantially contain a residual solvent.

**16.** The optical film of any of Claims 7-15, which has a thickness of at most 100 μm.

**17.** An optical device comprising the optical film of any of Claims 7-16, selected from a polarizer further comprising a polarizing element, an optical compensatory film, and a liquid crystal display device.

Fig.1

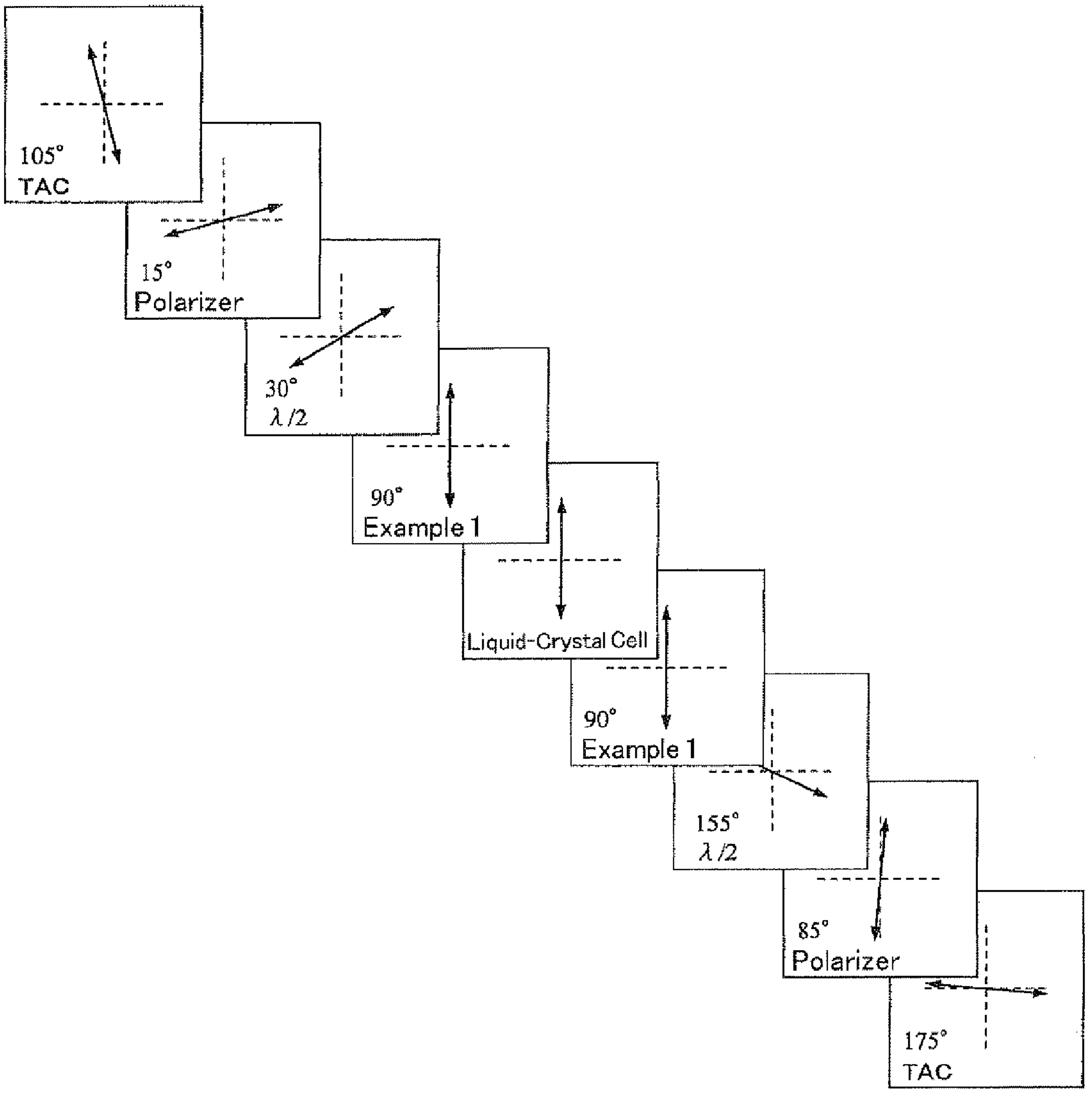
105°
TAC
15°
Polarizer
30°
λ/2
90°
Example 1
Liquid-Crystal Cell
90°
Example 1
155°
λ/2
85°
Polarizer
175°
TAC

Fig.2

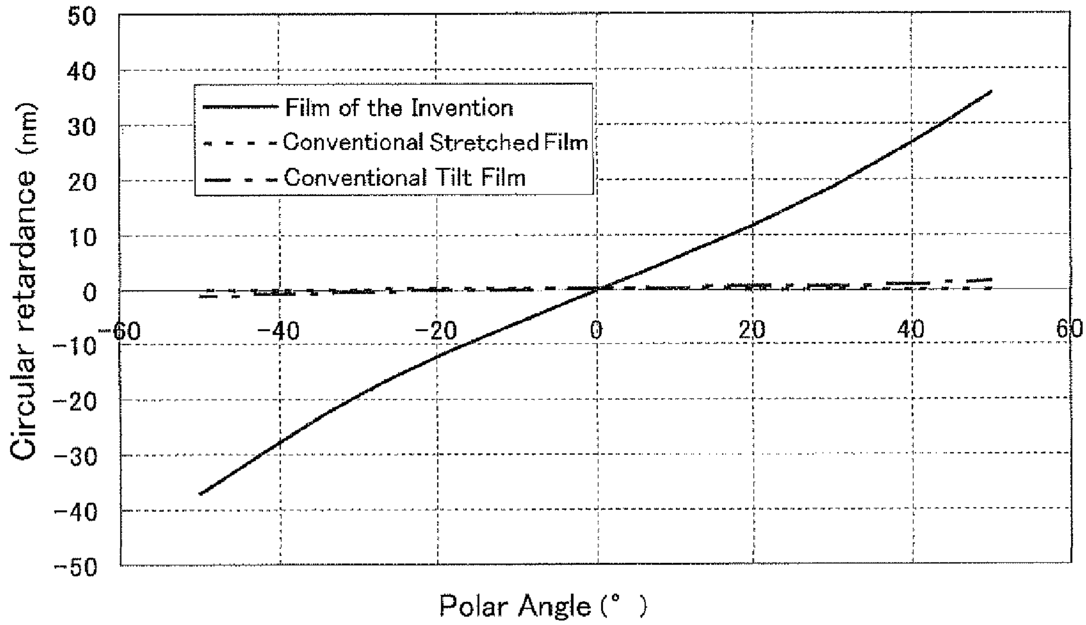
50
40
30
20
10
0
-10
-20
-30
-40
-50
-60
-40
-20
0
20
40
60
Circular retardance (nm)
Polar Angle (° )
Film of the Invention
Conventional Stretched Film
Conventional Tilt Film

Fig.3

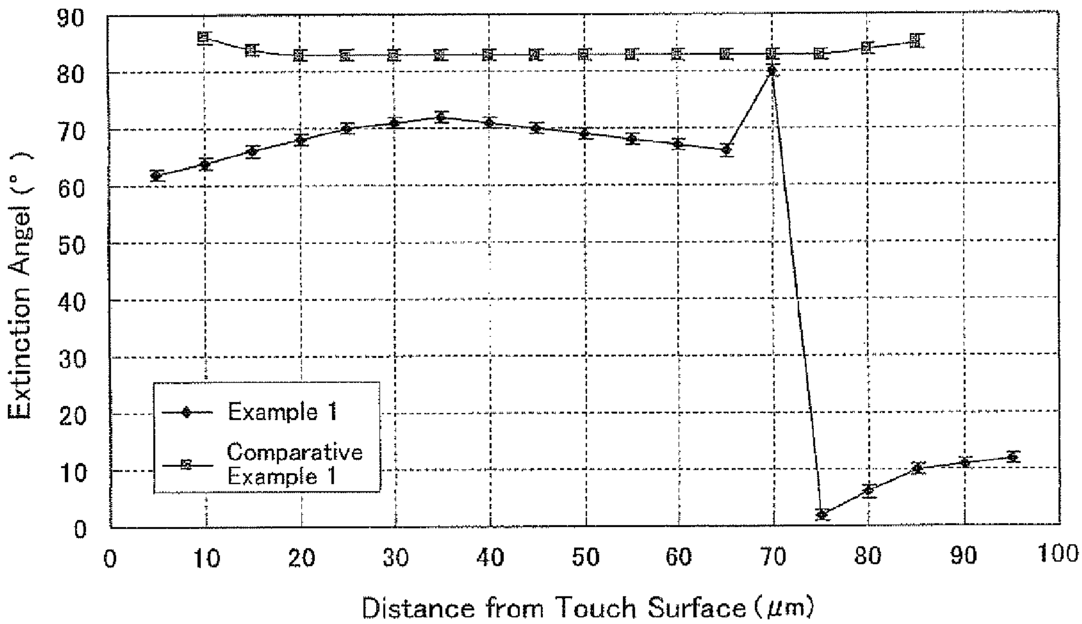
90
80
70
60
50
40
30
20
10
0
0
10
20
30
40
50
60
70
80
90
100
Extinction Angel (° )
Distance from Touch Surface (μm)
Example 1
Comparative Example 1

Fig.4

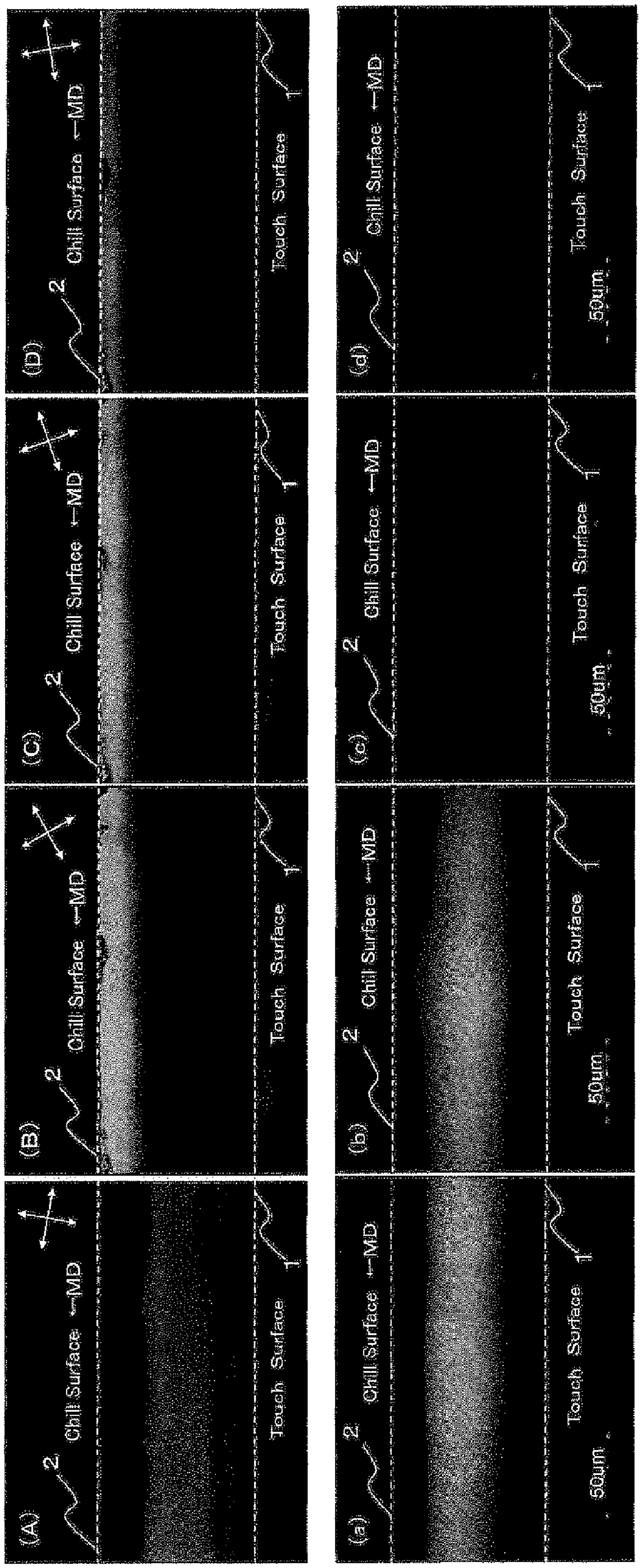

Fig.5

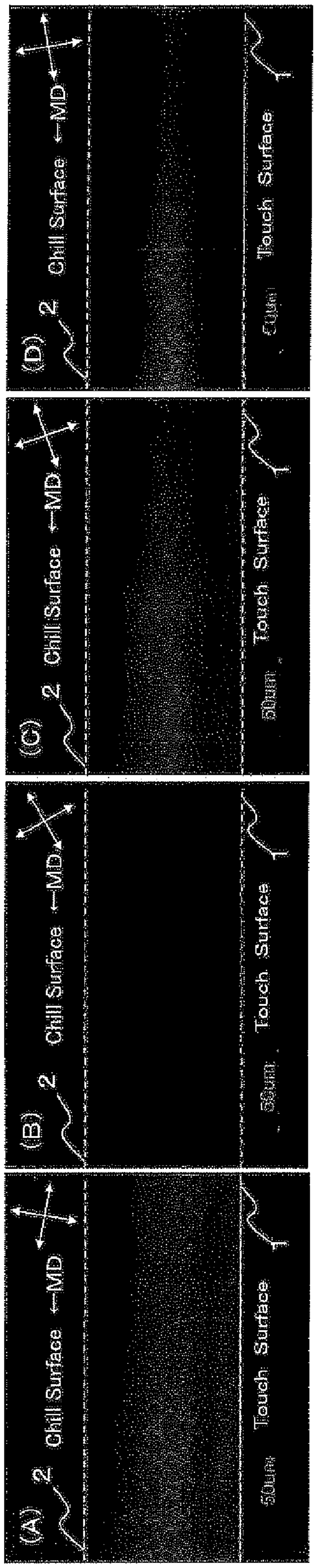

Fig.6

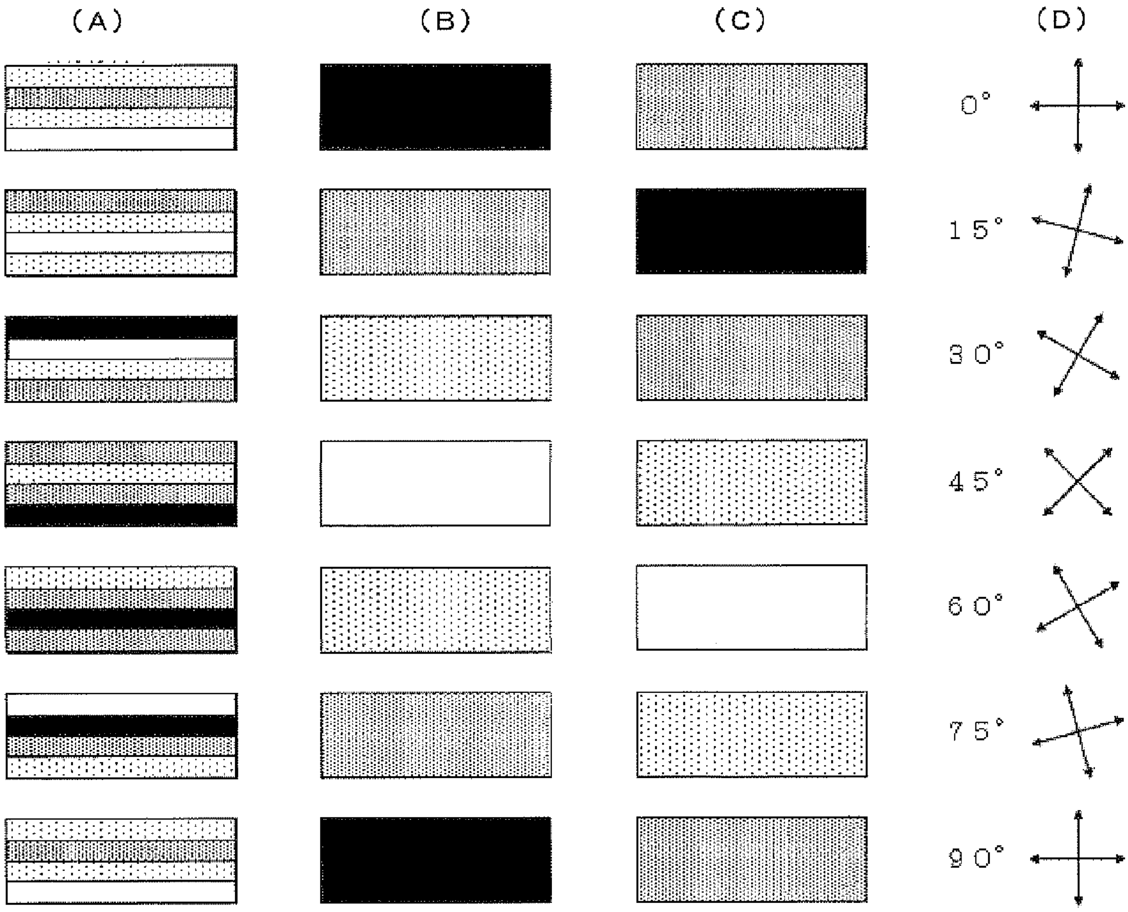

Fig.7

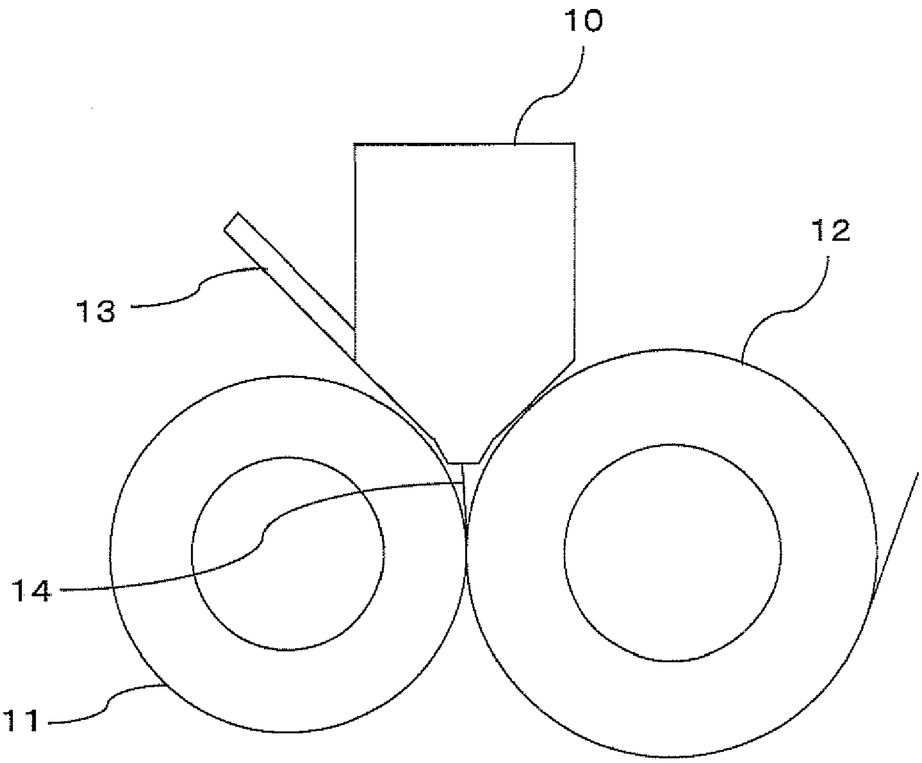

Fig.8

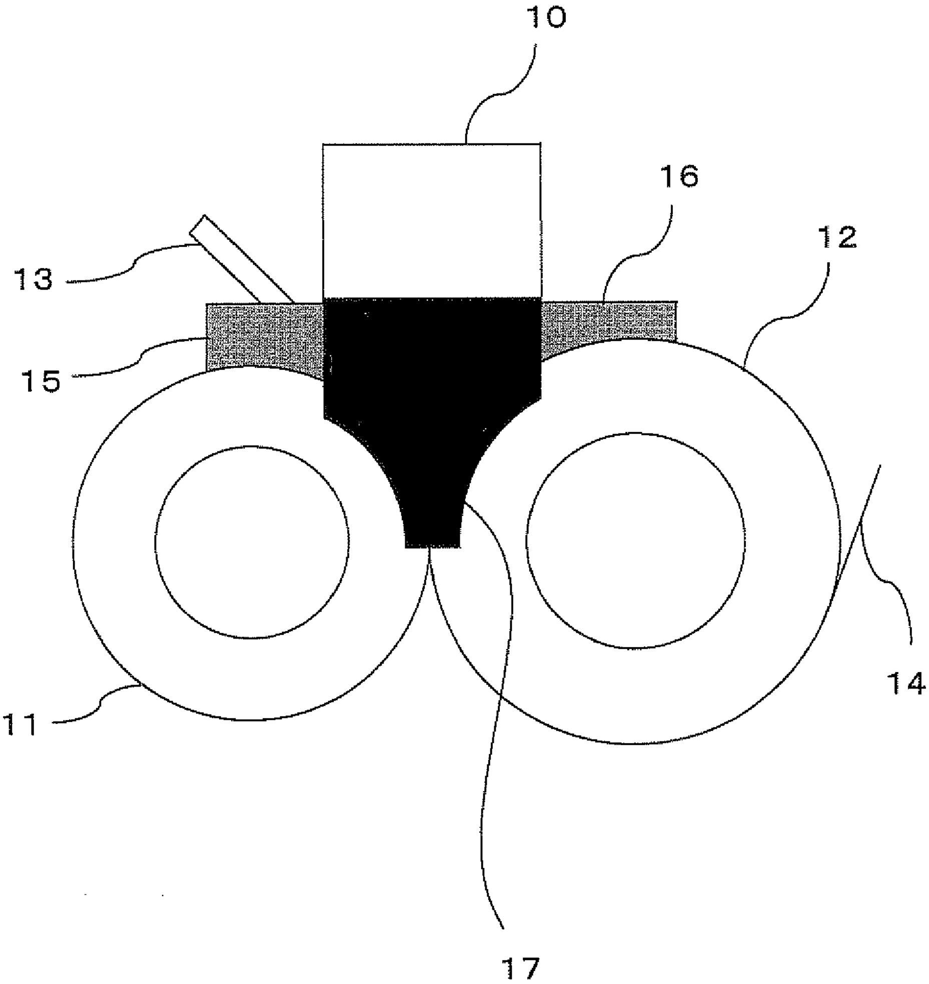

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6222213 A
- JP 2003025414 A
- JP 2007038646 A
- JP 3194904 B
- JP 3517471 B
- JP 3559360 B
- JP 3867178 B
- JP 3871721 B
- JP 3907908 B
- JP 3945598 B
- JP 2005527696 T
- JP 2006028993 A
- JP 2006011361 A
- WO 2006004376 A
- WO 2006030797 A
- WO 9814499 A
- JP 3060532 B
- JP 3220478 B
- JP 3273046 B
- JP 3404027 B
- JP 3428176 B
- JP 3687231 B
- JP 3873934 B
- JP 3912159 B
- JP 2006045500 A
- JP 2006241433 A
- JP 2007138141 A
- JP 2001188128 A
- JP 2006142800 A
- JP 2007098917 A
- JP 2006277914 A
- JP 2006106386 A
- JP 2006284703 A
- JP 2007297615 A
- JP 2007063541 A
- JP 2007070607 A
- JP 2007100044 A
- JP 2007254726 A
- JP 2007254727 A
- JP 2007261265 A
- JP 2007293272 A
- JP 2007297619 A
- JP 2007316366 A
- JP 2008009378 A
- JP 2008076764 A
- JP 2007113109 A
- JP 2003292714 A
- JP 6279546 A
- JP 2007051233 A
- JP 2001270905 A
- JP 2002167694 A
- JP 2000302988 A
- JP 2007113110 A
- JP 2007011565 A
- JP 2006241263 A
- JP 2004070290 A
- JP 2004070296 A
- JP 2004126546 A
- JP 2004163924 A
- JP 2004291302 A
- JP 2004292812 A
- JP 2005314534 A
- JP 2005326613 A
- JP 2005331728 A
- JP 2006131898 A
- JP 2006134872 A
- JP 2006206881 A
- JP 2006241197 A
- JP 2006283013 A
- JP 2007118266 A
- JP 2007176982 A
- JP 2007178504 A
- JP 2007197703 A
- JP 2008074918 A
- WO 2005105918 A
- JP 3199201 A
- JP 51907073 A
- JP 5194789 A
- JP 5271471 A
- JP 6107854 A
- JP 2004182979 A
- JP 51070316 A
- JP 10306175 A
- JP 57078431 A
- JP 54157159 A
- JP 55013765 A
- JP 10273494 A
- JP 60235852 A
- JP 6118233 A
- JP 6148430 A
- JP 7011055 A
- JP 7011056 A
- JP 8029619 A
- JP 8239509 A
- JP 2000204173 A

- US P4619956 A
- US P4839405 A
- JP 2003012859 A
- JP 2001166144 A
- JP 2003344655 A
- JP 2003248117 A
- JP 2003066230 A
- JP 2001328973 A
- JP 2006227630 A
- JP 2006323069 A
- JP 2007248780 A
- JP 2000219752 A
- JP 11314263 A
- JP 2002036332 A
- JP 11235747 A
- WO 9728950 A
- JP 2004216717 A
- JP 2003145609 A
- JP 2000171635 A
- JP 2003215563 A
- JP 2005189437 A
- JP 2006199788 A
- JP 2006215463 A
- JP 2006227090 A
- JP 2006243216 A
- JP 2006243681 A
- JP 2006259313 A
- JP 2006276574 A
- JP 2006316181 A
- JP 2007010756 A
- JP 2007128025 A
- JP 2007140092 A
- JP 2007171943 A
- JP 2007334307 A
- JP 2008020891 A
- JP 2007065635 A
- JP 2008262187 A
- JP 2008268939 A
- JP 2006348123 A
- JP 2002311426 A
- JP 9127885 A
- JP 2008201288 A
- JP 2009115420 A

**Non-patent literature cited in the description**


- *Journal of Applied Physics,* 2005, vol. 98, 016106
- **Hatsumei Kyokai.** *Hatsumei Kyokai Disclosure Bulletin,* 15 March 2001, 7-12
- **Hatsumei Kyokai.** *Hatsumei Kyokai Disclosure Bulletin,* 15 March 2001, 17-22